(19) Europäisches Patentamt
European Patent Office
Office européen des brevets

(11) **EP 4 617 971 B1**

(12) **EUROPEAN PATENT SPECIFICATION**

(45) Date of publication and mention
of the grant of the patent:
**31.12.2025   Bulletin 2026/01**

(21) Application number: **25162774.1**

(22) Date of filing: **11.03.2025**

(51) International Patent Classification (IPC):
**G06N 20/00** (2019.01)     **G06Q 10/0837** (2023.01)
**G06Q 30/0202** (2023.01)     **G06Q 30/0601** (2023.01)
**G06Q 30/016** (2023.01)

(52) Cooperative Patent Classification (CPC):
**G06N 20/00; G06Q 10/0837; G06Q 30/016;
G06Q 30/0202; G06Q 30/0631**

(54) **METHOD AND SYSTEM FOR MANAGING ITEM RETURNS**

VERFAHREN UND SYSTEM ZUR VERWALTUNG VON ARTIKEL-RÜCKSENDUNGEN

PROCÉDÉ ET SYSTÈME DE GESTION DE RETOURS D'ARTICLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.03.2024   IN 202421018725**

(43) Date of publication of application:
**17.09.2025   Bulletin 2025/38**

(73) Proprietor: **Tata Consultancy Services Limited
Maharashtra (IN)**

(72) Inventors:
• **THIRUNAVUKKARASU, Jeisobers**
600098 Chennai, Tamil Nadu (IN)
• **KRISHNADHAS MANI, Thangakumar**
600042 Chennai, Tamil Nadu (IN)
• **BALRAJ, Srjana**
1082 MS Amsterdam (NL)
• **RAJKUMAR, Gulshan**
560066 Bangalore, Karnataka (IN)

(74) Representative: **Goddar, Heinz J.
Boehmert & Boehmert
Anwaltspartnerschaft mbB
Pettenkoferstrasse 22
80336 München (DE)**

(56) References cited:
**CN-A- 105 574 599     US-A1- 2016 321 684**

• URBANKE PATRICK ET AL: "Predicting Product
Returns in E-Commerce: The Contribution of
Mahalanobis Feature Extraction Completed
Research Paper", THIRTY SIXTH
INTERNATIONAL CONFERENCE ON
INFORMATION SYSTEMS, 31 December 2015
(2015-12-31), pages 1 - 20, XP093275953,
Retrieved from the Internet <URL:https://www.
researchgate.net/publication/
283270887_Predicting_Product_Returns_in_E-
Commerce_The_Contribution_of_Mahalanobis_
Feature_Extraction> [retrieved on 20250509]

EP 4 617 971 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS AND PRIORITY

The present application claims priority to Indian application no. Indian Patent Application No. 202421018725, filed on March 14, 2024.

TECHNICAL FIELD

The disclosure herein generally relates to the field of e-commerce and, more particularly, to a method and system for managing item returns.

BACKGROUND

Online shopping is becoming a convenient shopping method for consumers because of its fast product search, quick payment, and timely delivery to their doorstep. As a result, it has become part of most consumers' lifestyle, leading to an explosive growth of e-commerce. However, there is a high rate of product returns in online shopping when compared to customers of brick-and-mortar retailers. Because online shoppers cannot touch and feel a product, to determine how well it fits their tastes and needs. Instead, they have to rely on textual descriptions, photos, and, in general, representations that may not be sufficiently accurate or media rich. Therefore, it is more difficult for customers to make accurate decisions, with a potentially higher risk of dissatisfaction when they receive the product. Hence, shoppers take a cautious approach and add many similar items into the cart that satisfy the intended characteristics and proceed for check out. In many instances, the number of similar items ordered by shoppers are many with varying degree of similarity that satisfies the intended characteristics. Because of this, most consumers choose to return one or more products, according to the merchant's return policy. Although liberal return policies can motivate consumers to purchase from online retailers and can help build customer loyalty, without proper management and control they can lead to substantial losses for consumers, retailers, and manufacturers.

Conventional methods generally focus on predicting product return policies based on influencing customer purchasing behaviors. Some other conventional methods focus on forecasting product returns at the product category level, in order to optimize inventory control. However, there is a lack of methods and systems to systematically analyze the key driving forces driving consumers' product returns based on historical data, and to predict the potential returns. CN105574599A discloses a method for estimating a sales return rate of an order. The method comprises: predicting an expected sales return rate of an order according to a first sales return rate associated index; predicting an expected average sales return rate in the current season according to a second sales return rate associated index; and adjusting the expected sales return rate of the order according to the expected average sales return rate in the current season, thereby obtaining a final expected sales return rate of the order. According to the technical scheme of the present application, prediction for the sales return rate of a single order can reflect influences of factors such as seasonal or periodic promotions and the like, so that accuracy of prediction is improved, e-commerce operating costs are reduced, and operation efficiency is improved (Abstract).

Urbanke Patrick ET AL: "Predicting Product Returns in E-Commerce: The Contribution of Mahalanobis Feature Extraction Completed Research Paper", discloses product returns are a major challenge in e-commerce that severely affect the economic and ecological sustainability of the industry. While many static one-size-fits-all approaches to limit product returns have been proposed, there is a gap in the literature regarding strategies based on individual consumption patterns. We introduce a decision support system for the prediction of product returns, including a new approach for large-scale feature extraction. This system can be used as the basis for a returns strategy that allows online retailers to intervene before problematic transactions even take place. Using a dataset containing 1,149,262 purchases obtained from a major German online retailer, we demonstrate that our decision support system can identify consumption patterns associated with a high product return rate at sufficient accuracy for such a strategy to be feasible. We also show that the system outperforms a wide selection of state-of-the art classification and dimensionality reduction algorithms (Abstract).

US 2016/321684 A1 discloses a mechanism for predicting and reducing product return. For a historical regular product purchase associated with a current product purchase by a customer, a distribution of a number of product purchases and a distribution of a number of product returns is generated. A determination is made of a probability of return of the current product as a function of the number of product purchases, the number of product returns, a distance, and a browsing time. Responsive to the identified probability of return being greater than a predetermined threshold, the identified probability of return is used to reduce the probability of return of the product through one or more interactions with the product (Abstract).

**EP 4 617 971 B1**

## SUMMARY

Embodiments of the present disclosure present technological improvements as solutions to one or more of the above-mentioned technical problems recognized by the inventors in conventional systems. For example, in one embodiment, a method for managing item returns is provided. The method includes receiving, via one or more hardware processors, a historical transaction data associated with each of a plurality of invoices pertaining to shoppers and a contextual information, wherein the historical transaction data comprises an online transaction data, a customer profile, an online return data, and the contextual information comprises a plurality of local events, wherein each of the plurality of invoices is associated with at least one group from among a plurality of groups, wherein each of the plurality of groups is formed based on a level of hierarchy, and wherein the level of hierarchy comprises a department, a category, a class, and a subclass. Further, the method includes generating, via the one or more hardware processors, a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value. Furthermore, the method includes simultaneously generating, via the one or more hardware processors, a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix. Furthermore, the method includes simultaneously generating, via the one or more hardware processors, a dynamic linkage spread for each of the plurality of groups pertaining to each of the plurality of invoices based on the historical transaction data by applying PCoA (Principal Coordinate Analysis) on an associated distance matrix. Furthermore, the method includes training, via the one or more hardware processors, a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information. Finally, the method includes finetuning, via the one or more hardware processors, the trained multivariate multiple binary ML model by modifying inputs associated with one of a) similarity spread and d) linkage spread until an optimal wilks lambda criterion is obtained, wherein the inputs comprises the distance matrix, the correlation matrix, the attribute matching percentage matrix and a linkage strength obtained from PCoA.

In another aspect, a managing item returns is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a historical transaction data associated with each of a plurality of invoices pertaining to shoppers and a contextual information, wherein the historical transaction data comprises an online transaction data, a customer profile, an online return data, and the contextual information comprises a plurality of local events, wherein each of the plurality of invoices is associated with at least one group from among a plurality of groups, wherein each of the plurality of groups is formed based on a level of hierarchy, and wherein the level of hierarchy comprises a department, a category, a class, and a subclass. Further, the one or more hardware processors are configured by the programmed instructions to generate a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value. Furthermore, the one or more hardware processors are configured by the programmed instructions to simultaneously generate, a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix. Furthermore, the one or more hardware processors are configured by the programmed instructions to simultaneously generate a dynamic linkage spread for each of the plurality of groups pertaining to each of the plurality of invoices based on the historical transaction data by applying PCoA (Principal Coordinate Analysis) on an associated distance matrix. Furthermore, the one or more hardware processors are configured by the programmed instructions to train a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information. Finally, the one or more hardware processors are configured by the programmed instructions to finetune the trained multivariate multiple binary ML model by modifying inputs associated with one of a) similarity spread and d) linkage spread until an optimal wilks lambda criterion is obtained, wherein the inputs comprises the distance matrix, the correlation matrix, the attribute matching percentage matrix and a linkage strength obtained from PCoA.

**In** yet another aspect, a computer program product including a non-transitory computer-readable medium embodied therein a computer program for managing item returns is provided. The computer readable program, when executed on a computing device, causes the computing device to receive a historical transaction data associated with each of a plurality of invoices pertaining to shoppers and a contextual information, wherein the historical transaction data comprises an online transaction data, a customer profile, an online return data, and the contextual information comprises a plurality of local events, wherein each of the plurality of invoices is associated with at least one group from among a plurality of groups, wherein each of the plurality of groups is formed based on a level of hierarchy, and wherein the level of hierarchy comprises a department, a category, a class, and a subclass. Further, the computer readable program, when executed on a computing device, causes the computing device to generate a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value. Furthermore, the computer readable program, when executed on a computing device, causes the computing device to simultaneously generate, a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix. Furthermore, the computer readable program, when executed on a computing device, causes the computing device to simultaneously generate a dynamic linkage spread for each of the plurality of groups pertaining to each of the plurality of invoices based on the historical transaction data by applying PCoA (Principal Coordinate Analysis) on an associated distance matrix. Furthermore, the one or more hardware processors are configured by the programmed instructions to train a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information. Finally, the computer readable program, when executed on a computing device, causes the computing device to finetune the trained multivariate multiple binary ML model by modifying inputs associated with one of a) similarity spread and d) linkage spread until an optimal wilks lambda criterion is obtained, wherein the inputs comprises the distance matrix, the correlation matrix, the attribute matching percentage matrix and a linkage strength obtained from PCoA.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for managing item returns, in accordance with some embodiments of the present disclosure.
FIG. 1B illustrates modules of the system for managing item returns, in accordance with some embodiments of the present disclosure.
FIG. 2A and FIG. 2B (also referred to as FIG. 2) illustrate a flow diagram for a processor implemented method for

**EP 4 617 971 B1**

managing item returns, in accordance with some embodiments of the present disclosure.

FIG. 3 illustrates example tables for finding similarity of items for the processor implemented method for managing item returns, in accordance with some embodiments of the present disclosure.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

To overcome the challenges of the conventional approaches, embodiments herein provide a method and system for managing item returns. In the present disclosure, items to be returned are estimated based on the type of items picked in association with the context. The context is the time of purchase, mode of purchase, shopper details, local events and the like. It is addressed by mapping return spread in unique format such as returned items are indicated in multiple columns and similarity spread in unique format such as similar items are indicated in multiple columns through multivariate models and training using historical purchase and return data. The return spread is related with similarity spread or linkage spread along with contextual factors through machine learning models for capturing the intrinsic mechanism that result returns by training a multivariate Machine Learning (ML) model using the actual return spread, the similarity spread, or the linkage spread and the customer profile data. The captured return mechanism is leveraged to pre-empt the returns in the form of return spread at the time of ordering or scanning the items in real time.to obtain a predicted return spread for a subgroup of an invoice.

The method maximizes accuracy of estimation of return propensity by dynamically adjusting a cut-off value for multivariate distance in a similarity matrix or adjusting a cut off value for linkage strength in a principal component of Principal Coordinate Analysis (PCoA) to identify similar items corresponding to an item of an invoice. The cut-off value of propensity for return to decide an item to be returned is adjusted by estimating and minimizing a gap between a predicted return spread and an actual return spread. A central database with the identified set of items to be returned is updated and it enables integration of a plurality of applications that are linked with the central data base to optimize operations associated with returns across value chain, wherein the plurality of applications pertains to CRM, automated emails, procurement, transport, logistic, storage, packaging, sales in brick and mortar stores, online sales, display, and advertisement.

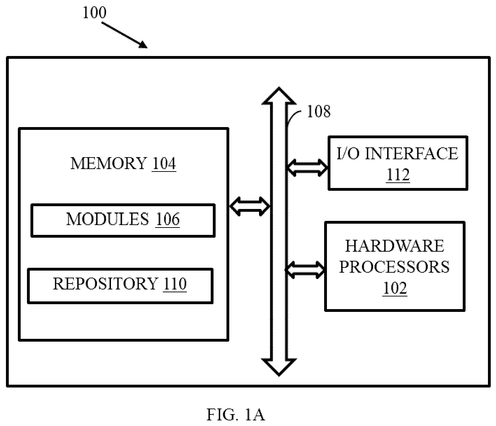

Referring now to the drawings, more particularly to FIG. 1A through FIG. 3, where similar reference characters denote corresponding features consistently throughout the figures, there are shown preferred embodiments, and these embodiments are described in the context of the following exemplary system and/or method.

FIG. 1A is a functional block diagram of a system 100 for managing item returns, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

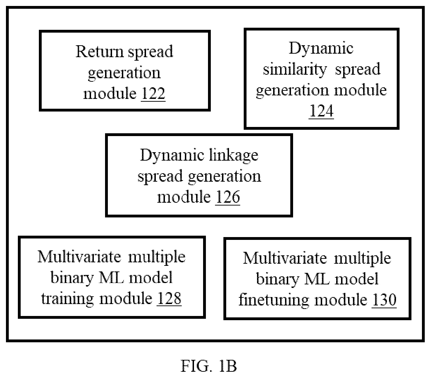

The plurality of modules 106 includes programs or coded instructions that supplement applications or functions performed by the system 100 for managing item returns. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for managing item returns. For example, the plurality of modules includes a return spread generation module 122 (shown in FIG. 1B), a Dynamic similarity spread generation module 124 (shown in FIG. 1B), a dynamic linkage spread generation module 126 (shown in FIG. 1B), a multivariate multiple binary ML model training module 128 (shown in FIG. 1B), and a multivariate multiple binary ML model finetuning module 130 (shown in FIG. 1B).

FIG. 1B illustrates the plurality of modules of a processor implemented method for managing item returns, in accordance with some embodiments of the present disclosure.

The data repository (or repository) 110 may include a plurality of abstracted pieces of code for refinement and data that is processed, received, or generated as a result of the execution of the plurality of modules in the module(s) 106.

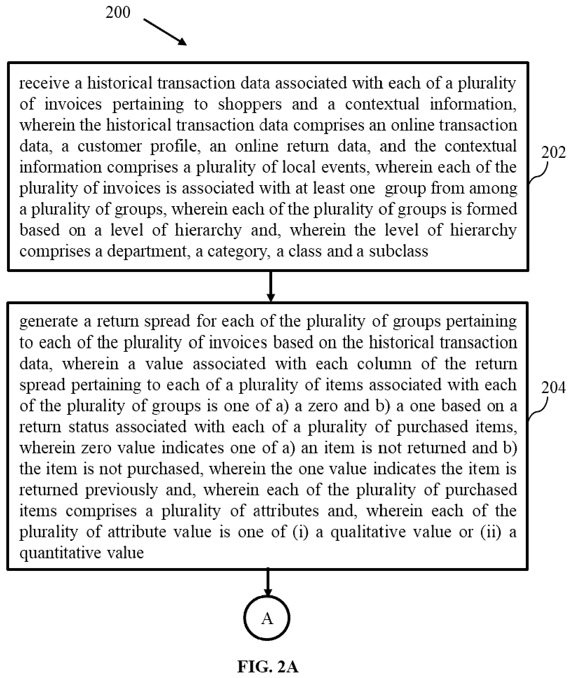

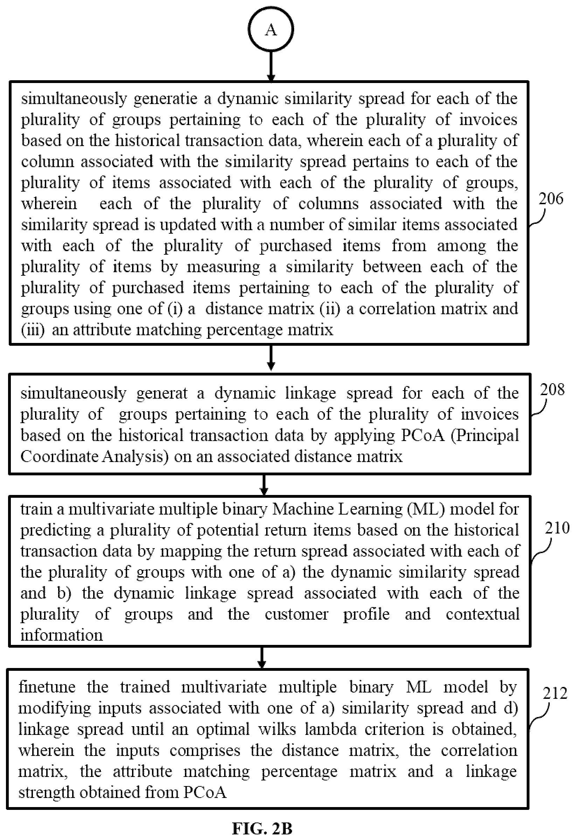

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2A and FIG. 2B (also referred to as FIG. 2) is an exemplary flow diagrams illustrating a method 200 for managing item returns implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive a historical transaction data associated with each of a plurality of invoices pertaining to shoppers and a contextual information. The historical transaction data includes an online transaction data, a customer profile, an online return data, and the contextual information comprises a plurality of local events. Each of the plurality of invoices is associated with at least one group from among a plurality of groups. Each of the plurality of groups is formed based on a level of hierarchy. The level of hierarchy comprises a department, a category, a class and a subclass. A plurality of items (purchased by a shopper) in an invoice may have similarity with respect to the characteristics of other items. Those items having more similarity may be formed as a part of group or subgroup to indicate that the items within a part of group or subgroup may have more similarity with respect to shopper need. Items which have similar characteristics in terms of buying preferences are formed into a group. A group may be formed in many ways. **In** one embodiment, a group is formed based on the level of hierarchy. For example, all items belonging to a category is identified as a group by the system and the items selected or bought by the shopper may belong to part of the group. **In** another embodiment, a category may have 50 to 100 items and the items bought by the shopper may be 5 to 10 items. The category refers to a group of items having similar buying preferences or having attribute values that are alternative to each other. Examples for category are women's tops, women's suits, men's shirts, men's suits, and mobile etc. Each of the one or more attributes has a predefined attribute value. **In** one example, wherein a women's top comprises attributes such as brand, apparel size, color and design pattern, etc. Each attribute has predefined attribute values such as blue, green and red for color and small, medium, large for size of apparels. In another embodiment, all items within a class which is one level lower to category may be identified as a group by the system. A class is a subset of category, and it refers to a group of items or items that have similar buying preferences or having attribute values that are alternative to each other.

When each item of the shopper/consumer invoice is mapped with item hierarchy, an invoice may have part of one group or many groups of items. Here the group may be identified through class or subclass or category mapping. The minimum group size needs to be greater than two and the minimal size of the group may be decided by system based on real time performance. Those historical invoices having the specific part of group/subgroup with the current items for a dynamic period are filtered, integrated with additional information such as return information and the like.

During data integration and processing, one group is picked from the groups of an invoices and only one group is considered at a time for a series of steps of processing and return spread and similarity spread are found as explained in the later sections to enable using as input for the ML model.

It is assumed that all the items within a part of group may have inter dependency between the one or more items with respect to shopper intention. The interdependency may be at the time of shopping and at the time of returning the items. Interdependency at the time of shopping is captured in a specific format, termed as similarity spread and interdependency at the time of returning is captured in a specific format, termed as return spread which are explained in following steps 204 through 210.

At step 204 of method 200, the return spread generation module 122, when executed by the one or more hardware processors 102 is configured by the programmed instructions to generate a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value.

At step 206, the dynamic similarity spread generation module 124, when executed by the one or more hardware processors 102 is configured by the programmed instructions to simultaneously generate a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix.

The steps for generating the dynamic similarity spread for each of the plurality of groups by measuring similarity between each of the plurality of purchased items pertaining to each of the plurality of groups using at least one of (i) the distance matrix, or (ii) the correlation matrix and (iii) the attribute matching percentage matrix includes the following. Initially, the qualitative attribute value associated with each of the plurality of purchased items corresponding to each of the plurality of groups are converted into quantitative value based on a sales performance associated with each of the plurality of purchased items. Further, the converted qualitative attribute value and the quantitative attribute values associated with each of the plurality of items are normalized using a standardization technique. Post normalization, one of (i) the distance matrix between each pair of purchased items from among the plurality of purchased item associated with each of the plurality of groups using the standardized attribute values (ii) the correlation matrix between each pair of purchased items associated with each of the plurality of groups using one of (a) a weekly (b) monthly and (c) yearly sales of the pair of the purchased items and (iii) the attribute matching percentage matrix for each pair of purchased items are computed by considering the attribute values associated with each of the plurality of purchased items. Finally, the dynamic similarity spread for each of the plurality of groups is generated by counting number of similar purchased items for each of the plurality of purchased items and filling in the dynamic similarity spread based on an ideal cut of value for one of (i) the distance matrix (ii) the correlation matrix and (iii) the attribute matching percentage matrix, wherein an associated ideal cut off value results in optimal wilks lambda criterion. An example for return spread is given in Table 1.

For example, the return spread is created by considering all the items within a subgroup/group. Return spread is created by considering returned items among the purchased items of a group. During integration of information, shopper specific returned items are integrated with corresponding invoice information. Return spread for each item group of each invoice is derived from the items returned and it is derived at invoice item subgroup level by creating multiple columns with indicator variable to capture spread of items during return. In an embodiment, a column namely 'return status for item_1' will take a value 0 or 1 based on the return status of the item 1. If the item got returned, then it is noted as '1' and if it is not returned then it is noted as '0' and here the '0' denotes those items belongs to a category which may or may not be bought by the shopper. The same procedure is followed for all the items of the item group. Thus, the return spread enables to capture underlying pattern that exist among the items of the item group that result in returns.

The return patterns can be in different forms. In one embodiment, it may be in the form of accepted items vs returned items. In another embodiment, it may be association among the accepted items. In yet another embodiment, it may be association among the returned items. This set up ensures simultaneous consideration of all the items within a group and also to capture inter dependency between the one or more items with respect to shopper intention with respect to returning of items within a group.

All the items within a group/subgroup of online assortment are considered to create return spread. If the size of subgroup is 'n' then the number of columns in the dependent variables is equal to 'n', among which the items returned are noted as '1' and other items are noted as '0'. This set up enables equal number of columns in the dependent variables across all the observations which is required to train a machine learning model.

Table 1

| Invoice ID | Subgroup of Items | Items Returned (Returned =1, Not Returned =0) Products (P1-P50), Subgroup size = 50 | | |
|---|---|---|---|---|
| | | P_1 | | P_m |
| Invoice_1 | In_1_SG_1 | 0 | | 1 |
| Invoice_2 | In_2_SG_1 | 1 | | 0 |
| Invoice_3 | In_3_SG_1 | | | |
| Invoice_4 | In_4_SG_1 | | | |
| ..... | | | | |
| Invoice_ | | | | |

An example similarity spread (in table format) obtained using distance matrix is given in Table 2B. Purchased items within the subgroup/group are compared pair wise for similarity based on the attribute values owned by them. Similarity of two items is measured based on many ways such as using one of the multivariate distance, correlation and attribute matching percentage and the like. (a) Similarity of two items is measured based on the multivariate distance measures. Multivariate measures such as Euclidean distance, mahalanobis distance etc., are calculated by using the Attribute Values (Avs) of quantitative nature. For example, the purchased items, with category mobile, may be identified with multiple ATs such as brand, memory size and color. Further, each AT can have multiple values, referred as the AVs. For example, the brand can have AVs as brand X, brand Y and brand Z. The memory size can have AVs such as 2 GB, 4 GB and 16 GB. The color can have AVs such as white, pink and black. Thus, each purchased item is defined by a set of AVs.

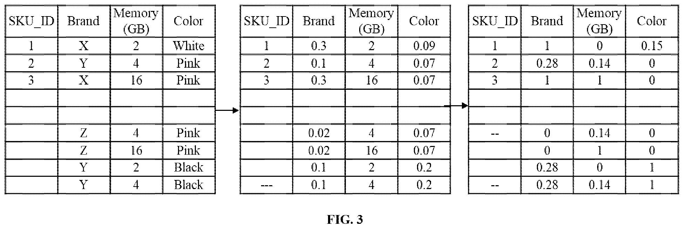

In an embodiment, for a category namely mobile, herein it can be (brand value, memory size, color value) such as item1= (X, 4 GB, white), item2= (X, 2 GB, pink), item3= (Y, 16GB, black). Thus, it can be seen that the AVs associated with a category of item can have both a qualitative AV type, such as white color, X brand and/or a quantitative AV such as memory size of 4 GB. If the AVS are qualitative nature they are converted into numerical value based on their sales performance as per the FIG. 3. The sales share per day indicates importance given by a shopper or user to the respective AV. Further, this sales share per day information for the AV of interest can be easily extracted from an entity database. Thus, the AV level performance values, the plurality of AVs that belong to the qualitative AV type are converted to quantitative. Further, for the AVs that belong to quantitative type are already having quantitative values. However, the scale of qualitative AV type and quantitative AV type may not necessary be identical, hence standardization is required to bring all the values of the AV level performance estimating sales share per day and the values of the plurality of AVs belonging to the quantitative type to a uniform scale, for fair comparison. Standardization enables bringing all values to a uniform scale for a fair comparison. Standardization is done in accordance with known standardization or scaling technique. The distance measure is calculated for each pair of items with standardized AV values within the group of items, and it is presented in the form of distance matrix as shown in Table 2A.

Table 2A

| Item_id | 1 | 2 | 3 | 4 | 5 | 6 |
|---|---|---|---|---|---|---|
| 1 | 0 | 106.9 | 224.29 | 18400 | 18400.28 | 18401.34 |
| 2 | 106.9 | 0 | 120 | 18400.31 | 18400.03 | 18400.42 |
| 3 | 224.29 | 120 | 0 | 18401.37 | 18400.42 | 18400.03 |
| 4 | 18400 | 18400.31 | 18401.37 | 0 | 102 | 222 |
| 5 | 18400.28 | 18400.03 | 18400.42 | 102 | 0 | 120 |
| 6 | 18401.34 | 18400.42 | 18400.03 | 222 | 120 | 0 |

Correlation for two items is found by using "weekly" sales of those items. The duration may be modified to "day" or "month". Attribute matching percentage for two items is derived by considering the attribute values owned by those items. It may be derived by calculating the number of attributes matched between those items.

Dynamic similarity spread as shown in the table 2B is generated for each of the plurality of groups by counting number of similar purchased items for each of the plurality of purchased items and filling in the dynamic similarity spread based on an ideal cut of value for one of (i) the distance matrix (ii) the correlation matrix and (iii) the attribute matching percentage matrix. The associated ideal cut off value results in optimal wilks lambda criterion as explained in later sections.

Table 2B

| Invoice ID | Subgroup of Items | | - | - | Number of similar item for each item of an invoice (P1-P50) within the subgroup | | |
| --- | --- | --- | --- | --- | --- | --- | --- |
| | | | - | - | P_1 | - | P_m |
| Invoice_1 | In_1_SG_1 | | - | - | 0 | - | 2 |
| Invoice_2 | In_2_SG_1 | | - | - | 4 | - | 0 |
| Invoice_3 | In_3_SG_1 | | | | | | |
| Invoice_4 | In_4_SG_1 | | | | | | |
| ..... | | | | | | | |
| Invoice_ | | | | | | | |

Further, at step 206, the dynamic linkage spread generation module 126, when executed by the one or more hardware processors 102 is configured by the programmed instructions to simultaneously generate a dynamic linkage spread for each of the plurality of groups pertaining to each of the plurality of invoices based on the historical transaction data by applying PCoA on an associated distance matrix.

The steps for generating the dynamic linkage spread for each of the plurality of groups based on the historical transaction data and the associated distance matrix using the PCoA includes the following. Initially, indicator values to be filled in the dynamic linkage spread is generated based on a comparison between the linkage strength associated with each of the plurality of purchased items computed by the PCoA with a linkage strength threshold. The dynamic linkage spread as per Table 3B is filled with '0' if the corresponding linkage strength is less than the linkage strength threshold and filled with a '1' if the associated linkage strength is greater than the linkage strength threshold, wherein the linkage strength threshold results in optimal wilks lambda criterion. Finally, the dynamic linkage spread is generated based on the generated indicator values, wherein '0' indicates that the item is not linked with other items and '1' indicates that the item is linked with other items. An example linkage spread template is given in Table 3A and the corresponding dynamic linkage spread template is given in Table 3B.

The distance between two purchased items bought by the shopper is measured and is repeated for all pairs of items purchased by the shopper to form distance matrix. The distance matrix is applied as input for PCoA to extract principal components and linkage strength and to derive linkage spread. Applying PCoA enables to extract distinct components among the items bought by the shopper and they capture shopper buying intention. The components are extracted in the form of principal components. The quality of extracted components depends on the interrelationship between items selected by the shopper in terms of attribute values. The interrelationship between items is measured from quality of extracted component and linkage strength of each item and it is noted as linkage strength of an item and it is calculated as per equation (1). If the attribute values of each attribute among the items are more related, then the quality of extracted components will be higher side. The quality of components is measured from the variance contribution by the components.

$$Linkage\ strength\ of\ an\ item\ =$$
$$Sum\ (\ magnitude\ of\ importance\ of\ component\ i\ *$$
$$loading\ of\ the\ item\ within\ the\ component\ i).............(1)$$

The quantified measure of linkage strength of an item may have values ranging from 0 to 1 as per (Table 3A) in which value of 0 indicates that the item is not linked with other items and value of 1 indicates that the item is linked with other items to the maximum extent.

Table 3A

| Invoice ID | Subgroup of Items | | - | - | Linkage Strength of Items (P1-P50) | | |
|---|---|---|---|---|---|---|---|
| | | | - | - | P_1 | | P_n |
| Invoice_1 | In_1_SG_1 | | - | - | 0.2 | | 0.6 |
| Invoice_2 | In_2_SG_1 | | - | - | **0** | | **0** |
| Invoice_3 | In_3_SG_1 | | | | | | |
| Invoice_4 | In_4_SG_1 | | | | | | |
| ..... | | | | | | | |
| Invoice_ | | | | | | | |

If an item has significant linkage value, then it is coded such as 1 else 0 in the multiple columns as indicator variables as shown in Table 3B and it enable to capture spread of items in terms of linkage. The dynamic linkage spread is filled with 0 if the corresponding linkage strength of an item is less than the linkage strength threshold and filled with a 1 if the associated linkage strength value is greater than the linkage strength threshold. Here the linkage strength threshold results in optimal wilks lambda criterion

Table 3B

| Invoice ID | Subgroup of Items | | - | - | Linkage Spread (P1-P50) | | |
|---|---|---|---|---|---|---|---|
| | | | - | - | P_1 | | P_n |
| Invoice_1 | In_1_SG_1 | | - | - | 0 | | 1 |
| Invoice_2 | In_2_SG_1 | | - | - | 0 | | 0 |
| Invoice_3 | In_3_SG_1 | | | | | | |
| Invoice_4 | In_4_SG_1 | | | | | | |
| ..... | | | | | | | |
| Invoice_ | | | | | | | |

It is assumed that interdependency at the time of online shopping, the items are related with interdependency at the time of returning the items which may be captured using machine learning models. Those invoices having a specific group for past dynamic period of time are filtered and processed to form return spread and similarity spread to use as input for ML model. The number of rows is equal to the number of filtered invoices that are having the specific group and used as input for ML model. The dynamic period may vary depending on the nature of category or class and the like. In an instance the period may be six months for seasonal items and thirty months for non-seasonal items. One invoice may have many groups with different period and each group is separated to form independent ML models. The ML model is explained in step 208 and 210.

Further, at step 208, the multivariate multiple binary ML model training module 128, when executed by the one or more hardware processors 102 is configured by the programmed instructions to train a multivariate multiple binary ML model based on the historical transaction data by mapping the return spread associated with each of the plurality of groups with one of a) the dynamic similarity spread and b) the dynamic linkage spread associated with each of the plurality of groups and the customer profile and contextual information in a format as indicated in Table 4 . Multivariate multiple binary ML model is trained by applying the return spread as dependent variables and linkage spread or similar spread and other influencing factors as independent variables. The multivariate multiple binary ML model used in the present disclosure is a regression based model. The influencing factors are the number of identified similar items for each item in the transaction in the form of similarity spread, shopper profile, local events, time factors and the like. The influencing factors for the returns are received as raw or processed data from different sources. They form independent variables. The number of similar items related with each item in the form of similarity spread or linkage spread forms the major role as independent variables. Among the influencing factors, a number of events such as local events related to sports, cultural and the like are received from generative AI. Attribute value mismatch score for each item is derived by the AV displayed in image during online purchase and expected AV as per the item description given in online

Table 4

| | | Invoice_1 | Invoice_2 | Invoice_3 | Invoice_4 | ..... | In-voice_ |
|---|---|---|---|---|---|---|---|
| Invoice ID | | In-voice_1 | In-voice_2 | In-voice_3 | In-voice_4 | | |
| Subgroup of Items | | In_1_SG_1 | In_2_SG_1 | In_3_SG_1 | In_4_SG_1 | | |
| YY/MM/DD/HH. | | | | | | | |
| Derived variable from Time stamp | | | | | | | |
| Old/Upcoming Event | | | | | | | |
| Customer Age | | ? | ? | ? | ? | ? | |
| Customer Income | | ? | ? | ? | ? | ? | |
| Customer Ethnicity | | ? | ? | ? | ? | ? | |
| Customer Profile_m | | | | | | | |
| Items bought (bought=1,'not bought=0) of an invoice within a subgroup | $P\_1$ | 1 | 1 | | | | |
| | $P\_m$ | 1 | 0 | | | | |
| Number of similar item for each item of an invoice (P1-P50) within the sub-group | $P\_1$ | 0 | 4 | | | | |
| | $P\_m$ | 2 | 0 | | | | |

and the expected AV is received from generative AI. Age, gender, ethnicity and other variables related with the shopper are received from CRM system.

The present disclosure ensures simultaneous consideration of all the items within a group and also to capture inter dependency between the one or more items with respect to shopper intention with respect to returning of items within a group. The shopper's intention may be captured in many ways. **In** an instance, the common property among the items in the group is captured by finding similar items for each item in the group. Patterns in the return items are captured through machine learning models. More specifically, similarity of items in the form of 'similarity spread' is mapped with patterns in the return items in the form of return spread through ML models.

The multivariate multiple binary ML models are developed using random forest technique which is an ensemble learning method for regression. There are provisions in some of the open source software to consider multi-columns as dependent variables and independent variables as causative factors. In one example, an open source software, R software has package called Random Forest SRC. This package has provision to consider multivariate variables as dependent variables and independent variables as causative factors.

For example, Wilks lambda is computed by performing multivariate multiple regression between return spread and influencing factors. Wilks' Lambda is a positive-valued statistic that ranges from 0 to 1. Decreasing values of the statistic indicate effects that contribute more to the model. Wilks lambda is computed iteratively by changing the cut off value of the distance value for deciding two items as similar which is used as one of the influencing factors. Two items are said to be similar if those items are having the (a) distance (b) correlation value or (c) attribute matching percentage below a dynamic threshold which is decided by the system by finding a point in which optimal wilks lambda is attained while running multivariate multiple regression. In a similar way, the number of similar items for each item in the group is calculated and used as influencing factors for return in multivariate multi structure machine learning model. The model with optimal wilks lambda will have the prediction power with maximum possible accuracy. The accuracy of estimation of return propensity is maximized by fine tuning the dynamic cut of value used for identifying similarity items.

The learning phase of the multivariate multiple binary ML model is carried out by using the developed model with latest historical data and duration of historical data may vary depending on the retailer. In an instance, it may be the latest six months for fashion items and last two years for grocery retailers and the like. The trained multivariate multiple binary ML model is applied with real time information received from different sources for the group and probability prediction is carried out. During prediction, mismatch score and upcoming events may be received from generative AI based on the context. Among the influencing factors, a number of events such as local events related with sports, cultural and the like may be received from generative AI. Attribute value mismatch score for each item is derived by the AV displayed in image during online purchase and expected AV as per the item description given in online and the expected AV may be received from generative AI.

At step 210 of the method 200, the multivariate multiple binary Machine Learning (ML) model finetuning module 130, when executed by the one or more hardware processors 102 is configured by the programmed instructions to finetune the trained multivariate multiple binary ML model by modifying inputs associated with one of a) similarity spread and d) linkage spread until an optimal wilks lambda criterion is obtained, wherein the inputs comprises the distance matrix, the correlation matrix, the attribute matching percentage matrix and a linkage strength obtained from PCoA.

In an embodiment, a plurality of potential return items are identified from among the plurality of purchased items for a new shopper using the finetuned multivariate multiple binary ML model, wherein the plurality of potential return items are updated in a central database to optimize operations associated with potential return items across value chain. An example with predicted return items for a plurality items belonging to various groups are given in Table 5A, 5B and 5C respectively. The e commerce invoice in real time is processed as per the independent variables format and probability of return for each item in the item group is predicted using the trained multivariate multi structure model. Ideal cut off value for the predicted probability of return for retail strategies is fine-tuned based on performance during testing phase of return management system. Fine tuning of cut off value of predicted probability is done to narrow down the gap between predicted 'Return spread' vs actual 'Return spread'.

Table 5A

| Invoice ID | Subgroup of Items | Items having chance of returning =1, No chance of returning =0) Products (P1-P50) | | |
|---|---|---|---|---|
| Invoice_1 | In_1_SG_1 | P_1 | | P_m |
| Invoice_2 | In_2_SG_1 | 0 | | 1 |

Table 5B

| Invoice ID | Subgroup of Items | Items having chance of returning =1, No chance of returning =0) Products (P1-P50) | | |
|---|---|---|---|---|
| Invoice_1 | In_1_SG_2 | P_1 | | P_n |
| Invoice_1 | In_1_SG_2 | 1 | | 0 |

Table 5C

| Invoice ID | Subgroup of Items | Items having chance of returning =1, No chance of returning =0) Products (P1-P50) | |
|---|---|---|---|
| Invoice_1 | In_1_SG_3 | P_1 | P_q |
| Invoice_1 | In_1_SG_3 | 0 | 0 |

The magnitude of propensity of item returns provides direction for next level of action at individual transaction level. For example, if a particular transaction has high propensity value for items to be returned, then it indicates that there is an action is needed on return management. The identified list of items having a significant chance of return is updated in a central database which is linked with many applications associated with value chain. In one instance, central database is connected with CRM to enable sending automated email to shoppers with instructions on how to return items after they receive their order. It ensures that the potential items will be returned as quickly as possible so that those items will be placed for reselling in full price. In another embodiment, central database is connected with packing applications to enable inclusion of return labels in packing box to ensure that the potential items will be returned as quick as possible. In another embodiment, central database is connected with reward applications to enable advanced planning for providing of incentives/rewards for completing returns in the store and also considering additional purchase made in store during a return by shopper. In yet another embodiment, pre-empting of returns enables advanced planning associated with return value chain such as return initiation, printing of shipping labels, dropping off return package with shipping company, delivery of returns to consolidation warehouse and delivery of returns to retailer warehouse.

The written description describes the subject matter herein to enable any person skilled in the art to make and use the embodiments. The scope of the subject matter embodiments is defined by the claims.

The embodiments of the present disclosure herein address the unresolved problem of managing item returns. In the present disclosure, return of item(s) is preempted based on the type of items/category picked scanned in association with the context. Further, the item returns are analyzed in the form of return spread to capture inter dependency of items returned. Identification of commonality among items in the form of linkage spread and similarity of items are captured in the form similarity spread. Furthermore, the present disclosure identifies similarity between items based on the moving threshold in multivariate distance. Furthermore, the present disclosure includes automated parameter fine tuning based on final outcome in reality.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), the method comprising:

    receiving (202), via one or more hardware processors, a historical transaction data associated with each of a plurality of invoices pertaining to shoppers and a contextual information, wherein the historical transaction data comprises an online transaction data, a customer profile, an online return data, and the contextual information comprises a plurality of local events, wherein the plurality of local events include sports events, cultural events,

        wherein each of the plurality of invoices is associated with at least one group from among a plurality of groups, wherein each of the plurality of groups is formed based on a level of hierarchy, and wherein the level of hierarchy comprises a department, a category, a class, and a subclass;

    generating (204), via the one or more hardware processors, a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value;

    simultaneously generating (206), via the one or more hardware processors, a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix;

    simultaneously generating (208), via the one or more hardware processors, a dynamic linkage spread for each of the plurality of groups pertaining to each of the plurality of invoices based on the historical transaction data by applying PCoA (Principal Coordinate Analysis) on an associated distance matrix;

    training (210), via the one or more hardware processors, a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information, and

    finetuning (212), via the one or more hardware processors, the trained multivariate multiple binary ML model by modifying inputs associated with one of a) similarity spread and d) linkage spread until an optimal Wilks' lambda criterion is obtained, wherein the inputs comprise the distance matrix, the correlation matrix, the attribute matching percentage matrix and a linkage strength obtained from PCoA.

2. The method as claimed in claim 1, wherein during inferencing stage, the plurality of potential return items are predicted from among the plurality of purchased items for a new shopper using the finetuned multivariate multiple binary ML model, wherein the prediction of the plurality of potential return items is used as input to optimize operations associated with the plurality of potential return items across value chain, and wherein the plurality of potential return items are updated in a central database.

3. The method as claimed in claim 1, wherein the steps for generating the dynamic similarity spread for each of the plurality of groups by measuring similarity between each of the plurality of purchased items pertaining to each of the plurality of groups comprises:

converting the qualitative attribute value associated with each of the plurality of purchased items corresponding to each of the plurality of groups into quantitative value based on a sales performance associated with each of the plurality of purchased items;

standardizing the converted qualitative attribute value and the quantitative attribute values associated with each of the plurality of items using a standardization technique;

computing one of (i) the distance matrix between each pair of purchased items from among the plurality of purchased item associated with each of the plurality of groups using the standardized attribute values (ii) the correlation matrix between each pair of purchased items associated with each of the plurality of groups using one of (a) a weekly (b) monthly and (c) yearly sales of the pair of the purchased items and (iii) the attribute matching percentage matrix for each pair of purchased items by considering the attribute values associated with each of the plurality of purchased items; and

generating the dynamic similarity spread for each of the plurality of groups by counting number of similar purchased items for each of the plurality of purchased items and filling in the dynamic similarity spread based on an ideal cut of value for one of (i) the distance matrix (ii) the correlation matrix and (iii) the attribute matching percentage matrix, wherein an associated ideal cut off value results in optimal Wilks' lambda criterion.

4. The method as claimed in claim 1, wherein the steps for generating the dynamic linkage spread for each of the plurality of groups based on the historical transaction data and the associated distance matrix using the PCoA comprises:

generating indicator values to be filled in the dynamic linkage spread based on a comparison between the linkage strength associated with each of the plurality of purchased items computed by the PCoA with a linkage strength threshold, wherein the dynamic spread is filled with '0' if the corresponding linkage strength is less than the linkage strength threshold and filled with a '1' if the associated linkage strength is greater than the linkage strength threshold wherein the linkage strength threshold results in optimal Wilks' lambda criterion; and

updating the dynamic linkage spread based on the generated indicator values, wherein '0' indicates that the item is not linked with other items and '1' indicates that the item is linked with other items.

5. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a historical transaction data associated with each of a plurality of invoices pertaining to shoppers and a contextual information, wherein the historical transaction data comprises an online transaction data, a customer profile, an online return data, and the contextual information comprises a plurality of local events, wherein the plurality of local events include sports events, cultural events,

wherein each of the plurality of invoices is associated with at least one group from among a plurality of groups, wherein each of the plurality of groups is formed based on a level of hierarchy, and

wherein the level of hierarchy comprises a department, a category, a class, and a subclass;

generate a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value;

simultaneously generate a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix;

simultaneously generate a dynamic linkage spread for each of the plurality of groups pertaining to each of the plurality of invoices based on the historical transaction data by applying PCoA (Principal Coordinate Analysis) on an associated distance matrix;

train a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information; and

finetune the trained multivariate multiple binary ML model by modifying inputs associated with one of a) similarity spread and d) linkage spread until an optimal Wilks' lambda criterion is obtained, wherein the inputs comprises the distance matrix, the correlation matrix, the attribute matching percentage matrix and a linkage strength obtained from PCoA.

6.  The system as claimed in claim 5, wherein during inferencing stage, the plurality of potential return items are predicted from among the plurality of purchased items for a new shopper using the finetuned multivariate multiple binary ML model, wherein the prediction of the plurality of potential return items is used as input to optimize operations associated with the plurality of potential return items across value chain, and wherein the plurality of potential return items are updated in a central database.

7.  The system as claimed in claim 5, wherein the steps for generating the dynamic similarity spread for each of the plurality of groups by measuring similarity between each of the plurality of purchased items pertaining to each of the plurality of groups comprises:

converting the qualitative attribute value associated with each of the plurality of purchased items corresponding to each of the plurality of groups into quantitative value based on a sales performance associated with each of the plurality of purchased items;

standardizing the converted qualitative attribute value and the quantitative attribute values associated with each of the plurality of items using a standardization technique;

computing one of (i) the distance matrix between each pair of purchased items from among the plurality of purchased item associated with each of the plurality of groups using the standardized attribute values (ii) the correlation matrix between each pair of purchased items associated with each of the plurality of groups using one of (a) a weekly (b) monthly and (c) yearly sales of the pair of the purchased items and (iii) the attribute matching percentage matrix for each pair of purchased items by considering the attribute values associated with each of the plurality of purchased items; and

generating the dynamic similarity spread for each of the plurality of groups by counting number of similar purchased items for each of the plurality of purchased items and filling in the dynamic similarity spread based on an ideal cut of value for one of (i) the distance matrix (ii) the correlation matrix and (iii) the attribute matching percentage matrix, wherein an associated ideal cut off value results in optimal Wilks' lambda criterion.

8.  The system as claimed in claim 5, wherein the steps for generating the dynamic linkage spread for each of the plurality of groups based on the historical transaction data and the associated distance matrix using the PCoA comprises:

generating indicator values to be filled in the dynamic linkage spread based on a comparison between the linkage strength associated with each of the plurality of purchased items computed by the PCoA with a linkage strength threshold, wherein the dynamic spread is filled with '0' if the corresponding linkage strength is less than the linkage strength threshold and filled with a '1' if the associated linkage strength is greater than the linkage strength threshold wherein the linkage strength threshold results in optimal Wilks' lambda criterion; and

updating the dynamic linkage spread based on the generated indicator values, wherein '0' indicates that the item is not linked with other items and '1' indicates that the item is linked with other items.

9.  One or more non-transitory machine readable information storage mediums comprising one or more instructions which when executed by one or more hardware processors cause:

receiving, a historical transaction data associated with each of a plurality of invoices pertaining to shoppers and a contextual information, wherein the historical transaction data comprises an online transaction data, a customer profile, an online return data, and the contextual information comprises a plurality of local events, wherein the plurality of local events include sports events, cultural events,

wherein each of the plurality of invoices is associated with at least one group from among a plurality of groups, wherein each of the plurality of groups is formed based on a level of hierarchy, and

wherein the level of hierarchy comprises a department, a category, a class, and a subclass;

generating, a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value;

simultaneously generating, a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix;

simultaneously generating, a dynamic linkage spread for each of the plurality of groups pertaining to each of the plurality of invoices based on the historical transaction data by applying PCoA (Principal Coordinate Analysis) on an associated distance matrix;

training, a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information; and

finetuning, the trained multivariate multiple binary ML model by modifying inputs associated with one of a) similarity spread and d) linkage spread until an optimal Wilks' lambda criterion is obtained, wherein the inputs comprise the distance matrix, the correlation matrix, the attribute matching percentage matrix and a linkage strength obtained from PCoA.

10. The one or more non-transitory machine-readable information storage mediums as claimed in claim 9, wherein during inferencing stage, the plurality of potential return items are predicted from among the plurality of purchased items for a new shopper using the finetuned multivariate multiple binary ML model, wherein the prediction of the plurality of potential return items is used as input to optimize operations associated with the plurality of potential return items across value chain, and wherein the plurality of potential return items are updated in a central database.

11. The one or more non-transitory machine-readable information storage mediums as claimed in claim 9, wherein the steps for generating the dynamic similarity spread for each of the plurality of groups by measuring similarity between each of the plurality of purchased items pertaining to each of the plurality of groups comprises:

converting the qualitative attribute value associated with each of the plurality of purchased items corresponding to each of the plurality of groups into quantitative value based on a sales performance associated with each of the plurality of purchased items;

standardizing the converted qualitative attribute value and the quantitative attribute values associated with each of the plurality of items using a standardization technique;

computing one of (i) the distance matrix between each pair of purchased items from among the plurality of purchased item associated with each of the plurality of groups using the standardized attribute values (ii) the correlation matrix between each pair of purchased items associated with each of the plurality of groups using one of (a) a weekly (b) monthly and (c) yearly sales of the pair of the purchased items and (iii) the attribute matching percentage matrix for each pair of purchased items by considering the attribute values associated with each of the plurality of purchased items; and

generating the dynamic similarity spread for each of the plurality of groups by counting number of similar purchased items for each of the plurality of purchased items and filling in the dynamic similarity spread based on an ideal cut of value for one of (i) the distance matrix (ii) the correlation matrix and (iii) the attribute matching percentage matrix, wherein an associated ideal cut off value results in optimal Wilks' lambda criterion.

12. The one or more non-transitory machine-readable information storage mediums as claimed in claim 9, wherein the steps for generating the dynamic linkage spread for each of the plurality of groups based on the historical transaction data and the associated distance matrix using the PCoA comprises:

generating indicator values to be filled in the dynamic linkage spread based on a comparison between the linkage strength associated with each of the plurality of purchased items computed by the PCoA with a linkage strength threshold, wherein the dynamic spread is filled with '0' if the corresponding linkage strength is less than the linkage strength threshold and filled with a '1' if the associated linkage strength is greater than the linkage strength threshold wherein the linkage strength threshold results in optimal Wilks' lambda criterion; and

updating the dynamic linkage spread based on the generated indicator values, wherein '0' indicates that the item is not linked with other items and '1' indicates that the item is linked with other items.


**Patentansprüche**

1.  Prozessorimplementiertes Verfahren (200), wobei das Verfahren umfasst:

    Empfangen (202), über einen oder mehrere Hardwareprozessoren, von historischen Transaktionsdaten, die mit jeder einer Mehrzahl von Rechnungen, die Käufer betreffen, assoziiert sind, und von Kontextinformationen, wobei die historischen Transaktionsdaten Online-Transaktionsdaten, ein Kundenprofil, Online-Rückgabedaten umfassen und die Kontextinformationen eine Mehrzahl von lokalen Ereignissen umfassen, wobei die Mehrzahl von lokalen Ereignissen Sportereignisse, kulturelle Ereignisse beinhalten,

    wobei jede der Mehrzahl von Rechnungen mit mindestens einer Gruppe aus einer Mehrzahl von Gruppen assoziiert ist, wobei jede der Mehrzahl von Gruppen basierend auf einer Hierarchieebene gebildet wird, und wobei die Hierarchieebene eine Abteilung, eine Kategorie, eine Klasse und eine Unterklasse umfasst;

    Erzeugen (204), über den einen oder die mehreren Hardwareprozessoren, einer Rückgabestreuung für jede der Mehrzahl von Gruppen, die zu jeder der Mehrzahl von Rechnungen gehören, basierend auf den historischen Transaktionsdaten, wobei ein Wert, der mit jeder Spalte der Rückgabestreuung assoziiert ist, die zu jedem einer Mehrzahl von Gegenständen gehört, die mit jeder der Mehrzahl von Gruppen assoziiert sind, einer von a) einer Null und b) einer Eins ist, basierend auf einem Rückgabestatus, der mit jedem einer Mehrzahl von erworbenen Gegenständen assoziiert ist, wobei der Nullwert eines von a) ein Gegenstand wird nicht zurückgegeben und b) der Gegenstand wird nicht erworben, wobei der Eins-Wert angibt, dass der Gegenstand zuvor zurückgegeben wurde, und wobei jeder der Mehrzahl von erworbenen Gegenständen eine Mehrzahl von Attributen umfasst und wobei jeder der Mehrzahl von Attributwerten einer von (i) einem qualitativen Wert oder (ii) einem quantitativen Wert ist;

    gleichzeitiges Erzeugen (206), über den einen oder die mehreren Hardwareprozessoren, einer dynamischen Ähnlichkeitsstreuung für jede der Mehrzahl von Gruppen, die zu jeder der Mehrzahl von Rechnungen gehören, basierend auf den historischen Transaktionsdaten, wobei jede einer Mehrzahl von Spalten, die mit der Ähnlichkeitsstreuung assoziiert sind, zu jedem der Mehrzahl von Gegenständen gehört, die mit jeder der Mehrzahl von Gruppen assoziiert sind, wobei jede der Mehrzahl von Spalten, die mit der Ähnlichkeitsstreuung assoziiert sind, mit einer Anzahl von ähnlichen Gegenständen aktualisiert wird, die mit jedem der Mehrzahl von erworbenen Gegenständen aus der Mehrzahl von Gegenständen assoziiert sind, durch Messen einer Ähnlichkeit zwischen jedem der Mehrzahl von erworbenen Gegenständen, die zu jeder der Mehrzahl von Gruppen gehören, unter Verwendung eines von (i) einer Distanzmatrix, (ii) einer Korrelationsmatrix und (iii) einer Attributübereinstimmungsprozentsatzmatrix;

    gleichzeitiges Erzeugen (208), über den einen oder die mehreren Hardwareprozessoren, einer dynamischen Verknüpfungsstreuung für jede der Mehrzahl von Gruppen, die zu jeder der Mehrzahl von Rechnungen gehören, basierend auf den historischen Transaktionsdaten durch Anwenden von PCoA (Principal Coordinate Analysis) auf eine assoziierte Distanzmatrix;

    Trainieren (210), über den einen oder die mehreren Hardwareprozessoren, eines multivariaten multibinären Maschinenlernmodells (ML-Modells) zum Vorhersagen einer Mehrzahl von potenziellen Rückgabegegenständen basierend auf den historischen Transaktionsdaten durch Abbilden der Rückgabestreuung, die mit jeder der Mehrzahl von Gruppen assoziiert ist, mit einem von a) der dynamischen Ähnlichkeitsstreuung und b) der dynamischen Verknüpfungsstreuung, die mit jeder der Mehrzahl von Gruppen assoziiert sind, und dem Kundenprofil und Kontextinformationen, und

    Feinabstimmen (212), über den einen oder die mehreren Hardwareprozessoren, des trainierten multivariaten multibinären ML-Modells durch Modifizieren von Eingaben, die mit einem von a) der Ähnlichkeitsstreuung und d) der Verknüpfungsstreuung assoziiert sind, bis ein optimales Wilks-Lambda-Kriterium erhalten wird, wobei die Eingaben die Distanzmatrix, die Korrelationsmatrix, die Attributübereinstimmungsprozentsatzmatrix und eine Verknüpfungsstärke umfassen, die aus PCoA erhalten wird.

2.  Verfahren nach Anspruch 1, wobei während der Inferenzphase die Mehrzahl von potenziellen Rückgabegegenständen aus der Mehrzahl von erworbenen Gegenständen für einen neuen Käufer unter Verwendung des feinabgestimmten multivariaten multibinären ML-Modells vorhergesagt wird, wobei die Vorhersage der Mehrzahl von potenziellen Rückgabegegenständen als Eingabe verwendet wird, um Operationen zu optimieren, die mit der Mehrzahl von potenziellen Rückgabegegenständen über die Wertkette hinweg assoziiert sind, und wobei die Mehrzahl von potenziellen Rückgabegegenständen in einer zentralen Datenbank aktualisiert wird.

3. Verfahren nach Anspruch 1, wobei die Schritte zum Erzeugen der dynamischen Ähnlichkeitsstreuung für jede der Mehrzahl von Gruppen durch Messen der Ähnlichkeit zwischen jedem der Mehrzahl von erworbenen Gegenständen, die zu jeder der Mehrzahl von Gruppen gehören, umfassen:

Umwandeln des qualitativen Attributwerts, der mit jedem der Mehrzahl von erworbenen Gegenständen assoziiert ist, die jeder der Mehrzahl von Gruppen entsprechen, in einen quantitativen Wert basierend auf einer Verkaufsleistung, die mit jedem der Mehrzahl von erworbenen Gegenständen assoziiert ist;
Standardisieren des umgewandelten qualitativen Attributwerts und der quantitativen Attributwerte, die mit jedem der Mehrzahl von Gegenständen assoziiert sind, unter Verwendung einer Standardisierungstechnik;
Berechnen eines von (i) der Distanzmatrix zwischen jedem Paar von erworbenen Gegenständen aus der Mehrzahl von erworbenen Gegenständen, die mit jeder der Mehrzahl von Gruppen assoziiert sind, unter Verwendung der standardisierten Attributwerte (ii) der Korrelationsmatrix zwischen jedem Paar von erworbenen Gegenständen, die mit jeder der Mehrzahl von Gruppen assoziiert sind, unter Verwendung eines von (a) einem wöchentlichen (b) monatlichen und (c) jährlichen Verkauf des Paars der erworbenen Gegenstände und (iii) der Attributübereinstimmungsprozentsatzmatrix für jedes Paar von erworbenen Gegenständen durch Berücksichtigen der Attributwerte, die mit jedem der Mehrzahl von erworbenen Gegenständen assoziiert sind; und
Erzeugen der dynamischen Ähnlichkeitsstreuung für jede der Mehrzahl von Gruppen durch Zählen der Anzahl von ähnlichen erworbenen Gegenständen für jeden der Mehrzahl von erworbenen Gegenständen und Ausfüllen der dynamischen Ähnlichkeitsstreuung basierend auf einem idealen Cut-off-Wert für eines von (i) der Distanzmatrix, (ii) der Korrelationsmatrix und (iii) der Attributübereinstimmungsprozentsatzmatrix, wobei ein assoziierter idealer Cut-off-Wert zu einem optimalen Wilks' Lambda-Kriterium führt.

4. Verfahren nach Anspruch 1, wobei die Schritte zum Erzeugen der dynamischen Verknüpfungsstreuung für jede der Mehrzahl von Gruppen basierend auf den historischen Transaktionsdaten und der assoziierten Distanzmatrix unter Verwendung der PCoA umfassen:

Erzeugen von Indikatorwerten, die in die dynamische Verknüpfungsstreuung eingefüllt werden sollen basierend auf einem Vergleich zwischen der Verknüpfungsstärke , die mit jedem der Mehrzahl von erworbenen Gegenständen assoziiert ist, die durch die PCoA berechnet wird, mit einem Verknüpfungsstärkeschwellenwert, wobei die dynamische Streuung mit '0' gefüllt wird, wenn die entsprechende Verknüpfungsstärke kleiner als der Verknüpfungsstärkeschwellenwert ist, und mit einer '1' gefüllt wird, wenn die assoziierte Verknüpfungsstärke größer als der Verknüpfungsstärkeschwellenwert ist, wobei der Verknüpfungsstärkeschwellenwert zu einem optimalen Wilks' Lambda-Kriterium führt; und
Aktualisieren der dynamischen Verknüpfungsstreuung basierend auf den erzeugten Indikatorwerten, wobei '0' anzeigt, dass der Gegenstand nicht mit anderen Gegenständen verknüpft ist, und '1' anzeigt, dass der Gegenstand mit anderen Gegenständen verknüpft ist.

5. System (100), umfassend:
mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

Empfangen von historischen Transaktionsdaten, die mit jeder einer Mehrzahl von Rechnungen, die Käufer betreffen, assoziiert sind, und von Kontextinformationen, wobei die historischen Transaktionsdaten Online-Transaktionsdaten, ein Kundenprofil, Online-Rückgabedaten umfassen und die Kontextinformationen eine Mehrzahl von lokalen Ereignissen umfassen, wobei die Mehrzahl von lokalen Ereignissen Sportereignisse, kulturelle Ereignisse beinhalten,

wobei jede der Mehrzahl von Rechnungen mit mindestens einer Gruppe aus einer Mehrzahl von Gruppen assoziiert ist, wobei jede der Mehrzahl von Gruppen basierend auf einer Hierarchieebene gebildet wird, und wobei die Hierarchieebene eine Abteilung, eine Kategorie, eine Klasse und eine Unterklasse umfasst;

EP 4 617 971 B1

Erzeugen einer Rückgabestreuung für jede der Mehrzahl von Gruppen, die zu jeder der Mehrzahl von Rechnungen gehören, basierend auf den historischen Transaktionsdaten, wobei ein Wert, der mit jeder Spalte der Rückgabestreuung assoziiert ist, die zu jedem einer Mehrzahl von Gegenständen gehört, die mit jeder der Mehrzahl von Gruppen assoziiert sind, einer von a) einer Null und b) einer Eins ist, basierend auf einem Rückgabestatus, der mit jedem einer Mehrzahl von erworbenen Gegenständen assoziiert ist, wobei der Nullwert eines von a) ein Gegenstand wird nicht zurückgegeben und b) der Gegenstand wird nicht erworben, wobei der Eins-Wert angibt, dass der Gegenstand zuvor zurückgegeben wurde, und wobei jeder der Mehrzahl von erworbenen Gegenständen eine Mehrzahl von Attributen umfasst und wobei jeder der Mehrzahl von Attributwerten einer von (i) einem qualitativen Wert oder (ii) einem quantitativen Wert ist;

gleichzeitiges Erzeugen einer dynamischen Ähnlichkeitsstreuung für jede der Mehrzahl von Gruppen, die zu jeder der Mehrzahl von Rechnungen gehören, basierend auf den historischen Transaktionsdaten, wobei jede einer Mehrzahl von Spalten, die mit der Ähnlichkeitsstreuung assoziiert sind, zu jedem der Mehrzahl von Gegenständen gehört, die mit jeder der Mehrzahl von Gruppen assoziiert sind, wobei jede der Mehrzahl von Spalten, die mit der Ähnlichkeitsstreuung assoziiert sind, mit einer Anzahl von ähnlichen Gegenständen aktualisiert wird, die mit jedem der Mehrzahl von erworbenen Gegenständen aus der Mehrzahl von Gegenständen assoziiert sind, durch Messen einer Ähnlichkeit zwischen jedem der Mehrzahl von erworbenen Gegenständen, die zu jeder der Mehrzahl von Gruppen gehören, unter Verwendung eines von (i) einer Distanzmatrix, (ii) einer Korrelationsmatrix und (iii) einer Attributübereinstimmungsprozentsatzmatrix;

gleichzeitiges Erzeugen einer dynamischen Verknüpfungsstreuung für jede der Mehrzahl von Gruppen, die zu jeder der Mehrzahl von Rechnungen gehören, basierend auf den historischen Transaktionsdaten durch Anwenden von PCoA (Principal Coordinate Analysis) auf eine assoziierte Distanzmatrix;

Trainieren eines multivariaten multibinären Maschinenlernmodells (ML-Modells) zum Vorhersagen einer Mehrzahl von potenziellen Rückgabegegenständen basierend auf den historischen Transaktionsdaten durch Abbilden der Rückgabestreuung, die mit jeder der Mehrzahl von Gruppen assoziiert ist, mit einem von a) der dynamischen Ähnlichkeitsstreuung und b) der dynamischen Verknüpfungsstreuung, die mit jeder der Mehrzahl von Gruppen assoziiert sind, und dem Kundenprofil und Kontextinformationen; und

Feinabstimmen des trainierten multivariaten multibinären ML-Modells durch Modifizieren von Eingaben, die mit einem von a) der Ähnlichkeitsstreuung und d) der Verknüpfungsstreuung assoziiert sind, bis ein optimales Wilks' Lambda-Kriterium erhalten wird, wobei die Eingaben die Distanzmatrix, die Korrelationsmatrix, die Attributübereinstimmungsprozentsatzmatrix und eine Verknüpfungsstärke umfassen, die aus PCoA erhalten wird.

6. System nach Anspruch 5, wobei während der Inferenzphase die Mehrzahl von potenziellen Rückgabegegenständen aus der Mehrzahl von erworbenen Gegenständen für einen neuen Käufer unter Verwendung des feinabgestimmten multivariaten multibinären ML-Modells vorhergesagt wird, wobei die Vorhersage der Mehrzahl von potenziellen Rückgabegegenständen als Eingabe verwendet wird, um Operationen zu optimieren, die mit der Mehrzahl von potenziellen Rückgabegegenständen über die Wertkette hinweg assoziiert sind, und wobei die Mehrzahl von potenziellen Rückgabegegenständen in einer zentralen Datenbank aktualisiert wird.

7. System nach Anspruch 5, wobei die Schritte zum Erzeugen der dynamischen Ähnlichkeitsstreuung für jede der Mehrzahl von Gruppen durch Messen der Ähnlichkeit zwischen jedem der Mehrzahl von erworbenen Gegenständen, die zu jeder der Mehrzahl von Gruppen gehören, umfassen:

Umwandeln des qualitativen Attributwerts, der mit jedem der Mehrzahl von erworbenen Gegenständen assoziiert ist, die jeder der Mehrzahl von Gruppen entsprechen, in einen quantitativen Wert basierend auf einer Verkaufsleistung, die mit jedem der Mehrzahl von erworbenen Gegenständen assoziiert ist;

Standardisieren des umgewandelten qualitativen Attributwerts und der quantitativen Attributwerte, die mit jedem der Mehrzahl von Gegenständen assoziiert sind, unter Verwendung einer Standardisierungstechnik;

Berechnen eines von (i) der Distanzmatrix zwischen jedem Paar von erworbenen Gegenständen aus der Mehrzahl von erworbenen Gegenständen, die mit jeder der Mehrzahl von Gruppen assoziiert sind, unter Verwendung der standardisierten Attributwerte (ii) der Korrelationsmatrix zwischen jedem Paar von erworbenen Gegenständen, die mit jeder der Mehrzahl von Gruppen assoziiert sind, unter Verwendung eines von (a) einem wöchentlichen (b) monatlichen und (c) jährlichen Verkauf des Paars der erworbenen Gegenstände und (iii) der Attributübereinstimmungsprozentsatzmatrix für jedes Paar von erworbenen Gegenständen durch Berücksichtigen der Attributwerte, die mit jedem der Mehrzahl von erworbenen Gegenständen assoziiert sind; und

Erzeugen der dynamischen Ähnlichkeitsstreuung für jede der Mehrzahl von Gruppen durch Zählen der Anzahl von ähnlichen erworbenen Gegenständen für jeden der Mehrzahl von erworbenen Gegenständen und Ausfüllen der dynamischen Ähnlichkeitsstreuung basierend auf einem idealen Cut-off-Wert für eines von (i) der Distanzmatrix, (ii) der Korrelationsmatrix und (iii) der Attributübereinstimmungsprozentsatzmatrix, wobei ein assoziierter idealer Cut-off-Wert zu einem optimalen Wilks' Lambda-Kriterium führt.

8. System nach Anspruch 5, wobei die Schritte zum Erzeugen der dynamischen Verknüpfungsstreuung für jede der Mehrzahl von Gruppen basierend auf den historischen Transaktionsdaten und der assoziierten Distanzmatrix unter Verwendung der PCoA umfassen:

Erzeugen von Indikatorwerten, die in die dynamische Verknüpfungsstreuung eingefüllt werden sollen basierend auf einem Vergleich zwischen der Verknüpfungsstärke , die mit jedem der Mehrzahl von erworbenen Gegenständen assoziiert ist, die durch die PCoA berechnet wird, mit einem Verknüpfungsstärkeschwellenwert, wobei die dynamische Streuung mit '0' gefüllt wird, wenn die entsprechende Verknüpfungsstärke kleiner als der Verknüpfungsstärkeschwellenwert ist, und mit einer '1' gefüllt wird, wenn die assoziierte Verknüpfungsstärke größer als der Verknüpfungsstärkeschwellenwert ist, wobei der Verknüpfungsstärkeschwellenwert zu einem optimalen Wilks' Lambda-Kriterium führt; und
Aktualisieren der dynamischen Verknüpfungsstreuung basierend auf den erzeugten Indikatorwerten, wobei '0' anzeigt, dass der Gegenstand nicht mit anderen Gegenständen verknüpft ist, und '1' anzeigt, dass der Gegenstand mit anderen Gegenständen verknüpft ist.

9. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, bewirken:

Empfangen von historischen Transaktionsdaten, die mit jeder einer Mehrzahl von Rechnungen, die Käufer betreffen, assoziiert sind, und von Kontextinformationen, wobei die historischen Transaktionsdaten Online-Transaktionsdaten, ein Kundenprofil, Online-Rückgabedaten umfassen und die Kontextinformationen eine Mehrzahl von lokalen Ereignissen umfassen, wobei die Mehrzahl von lokalen Ereignissen Sportereignisse, kulturelle Ereignisse beinhalten,

wobei jede der Mehrzahl von Rechnungen mit mindestens einer Gruppe aus einer Mehrzahl von Gruppen assoziiert ist, wobei jede der Mehrzahl von Gruppen basierend auf einer Hierarchieebene gebildet wird, und wobei die Hierarchieebene eine Abteilung, eine Kategorie, eine Klasse und eine Unterklasse umfasst;

Erzeugen einer Rückgabestreuung für jede der Mehrzahl von Gruppen, die zu jeder der Mehrzahl von Rechnungen gehören, basierend auf den historischen Transaktionsdaten, wobei ein Wert, der mit jeder Spalte der Rückgabestreuung assoziiert ist, die zu jedem einer Mehrzahl von Gegenständen gehört, die mit jeder der Mehrzahl von Gruppen assoziiert sind, einer von a) einer Null und b) einer Eins ist, basierend auf einem Rückgabestatus, der mit jedem einer Mehrzahl von erworbenen Gegenständen assoziiert ist, wobei der Nullwert eines von a) ein Gegenstand wird nicht zurückgegeben und b) der Gegenstand wird nicht erworben, wobei der Eins-Wert angibt, dass der Gegenstand zuvor zurückgegeben wurde, und wobei jeder der Mehrzahl von erworbenen Gegenständen eine Mehrzahl von Attributen umfasst und wobei jeder der Mehrzahl von Attributwerten einer von (i) einem qualitativen Wert oder (ii) einem quantitativen Wert ist;
gleichzeitiges Erzeugen einer dynamischen Ähnlichkeitsstreuung für jede der Mehrzahl von Gruppen, die zu jeder der Mehrzahl von Rechnungen gehören, basierend auf den historischen Transaktionsdaten, wobei jede einer Mehrzahl von Spalten, die mit der Ähnlichkeitsstreuung assoziiert sind, zu jedem der Mehrzahl von Gegenständen gehört, die mit jeder der Mehrzahl von Gruppen assoziiert sind, wobei jede der Mehrzahl von Spalten, die mit der Ähnlichkeitsstreuung assoziiert sind, mit einer Anzahl von ähnlichen Gegenständen aktualisiert wird, die mit jedem der Mehrzahl von erworbenen Gegenständen aus der Mehrzahl von Gegenständen assoziiert sind, durch Messen einer Ähnlichkeit zwischen jedem der Mehrzahl von erworbenen Gegenständen, die zu jeder der Mehrzahl von Gruppen gehören, unter Verwendung eines von (i) einer Distanzmatrix, (ii) einer Korrelationsmatrix und (iii) einer Attributübereinstimmungsprozentsatzmatrix;
gleichzeitiges Erzeugen einer dynamischen Verknüpfungsstreuung für jede der Mehrzahl von Gruppen, die zu jeder der Mehrzahl von Rechnungen gehören, basierend auf den historischen Transaktionsdaten durch Anwenden von PCoA (Principal Coordinate Analysis) auf eine assoziierte Distanzmatrix;
Trainieren eines multivariaten multibinären Maschinenlernmodells (ML-Modells) zum Vorhersagen einer Mehrzahl von potenziellen Rückgabegegenständen basierend auf den historischen Transaktionsdaten durch Abbilden der Rückgabestreuung, die mit jeder der Mehrzahl von Gruppen assoziiert ist, mit einem von a) der dynamischen Ähnlichkeitsstreuung und b) der dynamischen Verknüpfungsstreuung, die mit jeder der Mehrzahl von Gruppen assoziiert sind, und dem Kundenprofil und Kontextinformationen; und
Feinabstimmen des trainierten multivariaten multibinären ML-Modells durch Modifizieren von Eingaben, die mit einem von a) der Ähnlichkeitsstreuung und d) der Verknüpfungsstreuung assoziiert sind, bis ein optimales Wilks'

Lambda-Kriterium erhalten wird, wobei die Eingaben die Distanzmatrix, die Korrelationsmatrix, die Attributübereinstimmungsprozentsatzmatrix und eine Verknüpfungsstärke umfassen, die aus PCoA erhalten wird.

10. Ein oder mehrere nichtflüchtige maschinenlesbare Informationsspeichermedien nach Anspruch 9, wobei während der Inferenzphase die Mehrzahl von potenziellen Rückgabegegenständen aus der Mehrzahl von erworbenen Gegenständen für einen neuen Käufer unter Verwendung des feinabgestimmten multivariaten multibinären ML-Modells vorhergesagt wird, wobei die Vorhersage der Mehrzahl von potenziellen Rückgabegegenständen als Eingabe verwendet wird, um Operationen zu optimieren, die mit der Mehrzahl von potenziellen Rückgabegegenständen über die Wertkette hinweg assoziiert sind, und wobei die Mehrzahl von potenziellen Rückgabegegenständen in einer zentralen Datenbank aktualisiert wird.

11. Ein oder mehrere nichtflüchtige maschinenlesbare Informationsspeichermedien nach Anspruch 9, wobei die Schritte zum Erzeugen der dynamischen Ähnlichkeitsstreuung für jede der Mehrzahl von Gruppen durch Messen der Ähnlichkeit zwischen jedem der Mehrzahl von erworbenen Gegenständen, die zu jeder der Mehrzahl von Gruppen gehören, umfassen:

Umwandeln des qualitativen Attributwerts, der mit jedem der Mehrzahl von erworbenen Gegenständen assoziiert ist, die jeder der Mehrzahl von Gruppen entsprechen, in einen quantitativen Wert basierend auf einer Verkaufsleistung, die mit jedem der Mehrzahl von erworbenen Gegenständen assoziiert ist;
Standardisieren des umgewandelten qualitativen Attributwerts und der quantitativen Attributwerte, die mit jedem der Mehrzahl von Gegenständen assoziiert sind, unter Verwendung einer Standardisierungstechnik;
Berechnen eines von (i) der Distanzmatrix zwischen jedem Paar von erworbenen Gegenständen aus der Mehrzahl von erworbenen Gegenständen, die mit jeder der Mehrzahl von Gruppen assoziiert sind, unter Verwendung der standardisierten Attributwerte (ii) der Korrelationsmatrix zwischen jedem Paar von erworbenen Gegenständen, die mit jeder der Mehrzahl von Gruppen assoziiert sind, unter Verwendung eines von (a) einem wöchentlichen (b) monatlichen und (c) jährlichen Verkauf des Paars der erworbenen Gegenstände und (iii) der Attributübereinstimmungsprozentsatzmatrix für jedes Paar von erworbenen Gegenständen durch Berücksichtigen der Attributwerte, die mit jedem der Mehrzahl von erworbenen Gegenständen assoziiert sind; und
Erzeugen der dynamischen Ähnlichkeitsstreuung für jede der Mehrzahl von Gruppen durch Zählen der Anzahl von ähnlichen erworbenen Gegenständen für jeden der Mehrzahl von erworbenen Gegenständen und Ausfüllen der dynamischen Ähnlichkeitsstreuung basierend auf einem idealen Cut-off-Wert für eines von (i) der Distanzmatrix, (ii) der Korrelationsmatrix und (iii) der Attributübereinstimmungsprozentsatzmatrix, wobei ein assoziierter idealer Cut-off-Wert zu einem optimalen Wilks' Lambda-Kriterium führt.

12. Ein oder mehrere nichtflüchtige maschinenlesbare Informationsspeichermedien nach Anspruch 9, wobei die Schritte zum Erzeugen der dynamischen Verknüpfungsstreuung für jede der Mehrzahl von Gruppen basierend auf den historischen Transaktionsdaten und der assoziierten Distanzmatrix unter Verwendung der PCoA umfassen:

Erzeugen von Indikatorwerten, die in die dynamische Verknüpfungsstreuung eingefüllt werden sollen basierend auf einem Vergleich zwischen der Verknüpfungsstärke , die mit jedem der Mehrzahl von erworbenen Gegenständen assoziiert ist, die durch die PCoA berechnet wird, mit einem Verknüpfungsstärkeschwellenwert, wobei die dynamische Streuung mit '0' gefüllt wird, wenn die entsprechende Verknüpfungsstärke kleiner als der Verknüpfungsstärkeschwellenwert ist, und mit einer '1' gefüllt wird, wenn die assoziierte Verknüpfungsstärke größer als der Verknüpfungsstärkeschwellenwert ist, wobei der Verknüpfungsstärkeschwellenwert zu einem optimalen Wilks' Lambda-Kriterium führt; und
Aktualisieren der dynamischen Verknüpfungsstreuung basierend auf den erzeugten Indikatorwerten, wobei '0' anzeigt, dass der Gegenstand nicht mit anderen Gegenständen verknüpft ist, und '1' anzeigt, dass der Gegenstand mit anderen Gegenständen verknüpft ist.

**Revendications**

1. Procédé mis en œuvre par processeur (200), le procédé comprenant :

la réception (202), par l'intermédiaire d'un ou plusieurs processeurs matériels, de données de transaction historiques associées à chacune d'une pluralité de factures concernant des acheteurs et d'informations contextuelles, dans lequel les données de transaction historiques comprennent des données de transaction en ligne, un profil de client, des données de retour en ligne, et les informations contextuelles comprennent une pluralité d'événements locaux, dans lequel la pluralité d'événements locaux comprend des événements sportifs, des événements culturels,

dans lequel chacune de la pluralité de factures est associée à au moins un groupe parmi une pluralité de groupes, dans lequel chacun de la pluralité de groupes est formé sur la base d'un niveau de hiérarchie, et dans lequel le niveau de hiérarchie comprend un département, une catégorie, une classe et une sous-classe ;

la génération (204), par l'intermédiaire des un ou plusieurs processeurs matériels, d'un étalement de retour pour chacun de la pluralité de groupes concernant chacune de la pluralité de factures sur la base des données de transaction historiques, dans lequel une valeur associée à chaque colonne de l'étalement de retour concernant chacun d'une pluralité d'articles associés à chacun de la pluralité de groupes est l'un parmi a) un zéro et b) un un sur la base d'un statut de retour associé à chacun d'une pluralité d'articles achetés, dans lequel la valeur zéro indique l'un parmi a) un article n'est pas retourné et b) l'article n'est pas acheté, dans lequel la valeur un indique que l'article est retourné précédemment et, dans lequel chacun de la pluralité d'articles achetés comprend une pluralité d'attributs et, dans lequel chacune de la pluralité de valeurs d'attribut est l'une parmi (i) une valeur qualitative ou (ii) une valeur quantitative ;
la génération simultanée (206), par l'intermédiaire des un ou plusieurs processeurs matériels, d'un étalement de similarité dynamique pour chacun de la pluralité de groupes concernant chacune de la pluralité de factures sur la base des données de transaction historiques, dans lequel chacune d'une pluralité de colonnes associées à l'étalement de similarité concerne chacun de la pluralité d'articles associés à chacun de la pluralité de groupes, dans lequel chacune de la pluralité de colonnes associées à l'étalement de similarité est mise à jour avec un nombre d'articles similaires associés à chacun de la pluralité d'articles achetés parmi la pluralité d'articles en mesurant une similarité entre chacun de la pluralité d'articles achetés concernant chacun de la pluralité de groupes en utilisant l'une parmi (i) une matrice de distance, (ii) une matrice de corrélation et (iii) une matrice de pourcentage de correspondance d'attributs ;
la génération simultanée (208), par l'intermédiaire des un ou plusieurs processeurs matériels, d'un étalement de liaison dynamique pour chacun de la pluralité de groupes concernant chacune de la pluralité de factures sur la base des données de transaction historiques en appliquant une analyse en coordonnées principales (PCoA) sur une matrice de distance associée ;
l'apprentissage (210), par l'intermédiaire des un ou plusieurs processeurs matériels, d'un modèle d'apprentissage machine (ML) binaire multiple multivarié pour prédire une pluralité d'articles de retour potentiels sur la base des données de transaction historiques en mettant en correspondance l'étalement de retour associé à chacun de la pluralité de groupes avec l'un parmi a) l'étalement de similarité dynamique et b) l'étalement de liaison dynamique associé à chacun de la pluralité de groupes et le profil de client et les informations contextuelles, et le réglage fin (212), par l'intermédiaire des un ou plusieurs processeurs matériels, du modèle ML binaire multiple multivarié entraîné en modifiant des entrées associées à l'un parmi a) l'étalement de similarité et d) l'étalement de liaison jusqu'à ce qu'un critère lambda de Wilks optimal soit obtenu, dans lequel les entrées comprennent la matrice de distance, la matrice de corrélation, la matrice de pourcentage de correspondance d'attributs et une force de liaison obtenue à partir de PCoA.

2. Procédé selon la revendication 1, dans lequel pendant l'étape d'inférence, la pluralité d'articles de retour potentiels sont prédits parmi la pluralité d'articles achetés pour un nouvel acheteur en utilisant le modèle ML binaire multiple multivarié réglé avec précision, dans lequel la prédiction de la pluralité d'articles de retour potentiels est utilisée comme entrée pour optimiser des opérations associées à la pluralité d'articles de retour potentiels à travers une chaîne de valeurs, et dans lequel la pluralité d'articles de retour potentiels sont mis à jour dans une base de données centrale.

3. Procédé selon la revendication 1, dans lequel les étapes pour générer l'étalement de similarité dynamique pour chacun de la pluralité de groupes en mesurant une similarité entre chacun de la pluralité d'articles achetés appartenant à chacun de la pluralité de groupes comprennent :

la conversion de la valeur d'attribut qualitative associée à chacun de la pluralité d'articles achetés correspondant à chacun de la pluralité de groupes en valeur quantitative sur la base d'une performance de vente associée à chacun de la pluralité d'articles achetés ;
la normalisation de la valeur d'attribut qualitative convertie et des valeurs d'attribut quantitatives associées à chacun de la pluralité d'articles en utilisant une technique de normalisation ;
le calcul de l'une parmi (i) la matrice de distance entre chaque paire d'articles achetés parmi la pluralité d'articles achetés associés à chacun de la pluralité de groupes en utilisant les valeurs d'attribut normalisées (ii) la matrice de corrélation entre chaque paire d'articles achetés associés à chacun de la pluralité de groupes en utilisant l'une parmi (a) les ventes hebdomadaires (b) mensuelles et (c) annuelles de la paire d'articles achetés et (iii) la matrice de pourcentage de correspondance d'attributs pour chaque paire d'articles achetés en considérant les valeurs d'attribut associées à chacun de la pluralité d'articles achetés ; et

la génération de l'étalement de similarité dynamique pour chacun de la pluralité de groupes en comptant le nombre d'articles achetés similaires pour chacun de la pluralité d'articles achetés et en remplissant l'étalement de similarité dynamique sur la base d'une coupure de valeur idéale pour l'une parmi (i) la matrice de distance, (ii) la matrice de corrélation et (iii) la matrice de pourcentage de correspondance d'attributs, dans lequel une valeur de coupure idéale associée résulte en un critère lambda de Wilks optimal.

4. Procédé selon la revendication 1, dans lequel les étapes pour générer l'étalement de liaison dynamique pour chacun de la pluralité de groupes sur la base des données de transaction historiques et de la matrice de distance associée en utilisant PCoA comprennent :

la génération de valeurs d'indicateur à remplir dans l'étalement de liaison dynamique sur la base d'une comparaison entre la force de liaison associée à chacun de la pluralité d'articles achetés calculée par PCoA avec un seuil de force de liaison, dans lequel l'étalement dynamique est rempli avec « 0 » si la force de liaison correspondante est inférieure au seuil de force de liaison et rempli avec un « 1 » si la force de liaison associée est supérieure au seuil de force de liaison dans lequel le seuil de force de liaison résulte en un critère lambda de Wilks optimal ; et

la mise à jour de l'étalement de liaison dynamique sur la base des valeurs d'indicateur générées, dans lequel « 0 » indique que l'article n'est pas lié à d'autres articles et « 1 » indique que l'article est lié à d'autres articles.

5. Système (100) comprenant :

au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir des données de transaction historiques associées à chacune d'une pluralité de factures concernant des acheteurs et des informations contextuelles, dans lequel les données de transaction historiques comprennent des données de transaction en ligne, un profil de client, des données de retour en ligne, et les informations contextuelles comprennent une pluralité d'événements locaux, dans lequel la pluralité d'événements locaux comprend des événements sportifs, des événements culturels,

dans lequel chacune de la pluralité de factures est associée à au moins un groupe parmi une pluralité de groupes, dans lequel chacun de la pluralité de groupes est formé sur la base d'un niveau de hiérarchie, et dans lequel le niveau de hiérarchie comprend un département, une catégorie, une classe et une sous-classe ;

générer un étalement de retour pour chacun de la pluralité de groupes concernant chacune de la pluralité de factures sur la base des données de transaction historiques, dans lequel une valeur associée à chaque colonne de l'étalement de retour concernant chacun d'une pluralité d'articles associés à chacun de la pluralité de groupes est l'un parmi a) un zéro et b) un un sur la base d'un statut de retour associé à chacun d'une pluralité d'articles achetés, dans lequel la valeur zéro indique l'un parmi a) un article n'est pas retourné et b) l'article n'est pas acheté, dans lequel la valeur un indique que l'article est retourné précédemment et, dans lequel chacun de la pluralité d'articles achetés comprend une pluralité d'attributs et, dans lequel chacune de la pluralité de valeurs d'attribut est l'une parmi (i) une valeur qualitative ou (ii) une valeur quantitative ;

générer simultanément un étalement de similarité dynamique pour chacun de la pluralité de groupes concernant chacune de la pluralité de factures sur la base des données de transaction historiques, dans lequel chacune d'une pluralité de colonnes associées à l'étalement de similarité concerne chacun de la pluralité d'articles associés à chacun de la pluralité de groupes, dans lequel chacune de la pluralité de colonnes associées à l'étalement de similarité est mise à jour avec un nombre d'articles similaires associés à chacun de la pluralité d'articles achetés parmi la pluralité d'articles en mesurant une similarité entre chacun de la pluralité d'articles achetés concernant chacun de la pluralité de groupes en utilisant l'une parmi (i) une matrice de distance, (ii) une matrice de corrélation et (iii) une matrice de pourcentage de correspondance d'attributs ;

générer simultanément un étalement de liaison dynamique pour chacun de la pluralité de groupes concernant chacune de la pluralité de factures sur la base des données de transaction historiques en appliquant une analyse en coordonnées principales (PCoA) sur une matrice de distance associée ;

apprendre un modèle d'apprentissage machine (ML) binaire multiple multivarié pour prédire une pluralité d'articles de retour potentiels sur la base des données de transaction historiques en mettant en correspondance l'étalement de retour associé à chacun de la pluralité de groupes avec l'un parmi a) l'étalement de similarité dynamique et b) l'étalement de liaison dynamique associé à chacun de la pluralité de groupes et le profil de client et les informations contextuelles ; et

régler fin le modèle ML binaire multiple multivarié entraîné en modifiant des entrées associées à l'un parmi a) l'étalement de similarité et d) l'étalement de liaison jusqu'à ce qu'un critère lambda de Wilks optimal soit obtenu, dans lequel les entrées comprennent la matrice de distance, la matrice de corrélation, la matrice de pourcentage de correspondance d'attributs et une force de liaison obtenue à partir de PCoA.

6. Système selon la revendication 5, dans lequel pendant l'étape d'inférence, la pluralité d'articles de retour potentiels sont prédits parmi la pluralité d'articles achetés pour un nouvel acheteur en utilisant le modèle ML binaire multiple multivarié réglé avec précision, dans lequel la prédiction de la pluralité d'articles de retour potentiels est utilisée comme entrée pour optimiser des opérations associées à la pluralité d'articles de retour potentiels à travers une chaîne de valeurs, et dans lequel la pluralité d'articles de retour potentiels sont mis à jour dans une base de données centrale.

7. Système selon la revendication 5, dans lequel les étapes pour générer l'étalement de similarité dynamique pour chacun de la pluralité de groupes en mesurant une similarité entre chacun de la pluralité d'articles achetés appartenant à chacun de la pluralité de groupes comprennent :

la conversion de la valeur d'attribut qualitative associée à chacun de la pluralité d'articles achetés correspondant à chacun de la pluralité de groupes en valeur quantitative sur la base d'une performance de vente associée à chacun de la pluralité d'articles achetés ;

la normalisation de la valeur d'attribut qualitative convertie et des valeurs d'attribut quantitatives associées à chacun de la pluralité d'articles en utilisant une technique de normalisation ;

le calcul de l'une parmi (i) la matrice de distance entre chaque paire d'articles achetés parmi la pluralité d'articles achetés associés à chacun de la pluralité de groupes en utilisant les valeurs d'attribut normalisées (ii) la matrice de corrélation entre chaque paire d'articles achetés associés à chacun de la pluralité de groupes en utilisant l'une parmi (a) les ventes hebdomadaires (b) mensuelles et (c) annuelles de la paire d'articles achetés et (iii) la matrice de pourcentage de correspondance d'attributs pour chaque paire d'articles achetés en considérant les valeurs d'attribut associées à chacun de la pluralité d'articles achetés ; et

la génération de l'étalement de similarité dynamique pour chacun de la pluralité de groupes en comptant le nombre d'articles achetés similaires pour chacun de la pluralité d'articles achetés et en remplissant l'étalement de similarité dynamique sur la base d'une coupure de valeur idéale pour l'une parmi (i) la matrice de distance, (ii) la matrice de corrélation et (iii) la matrice de pourcentage de correspondance d'attributs, dans lequel une valeur de coupure idéale associée résulte en un critère lambda de Wilks optimal.

8. Système selon la revendication 5, dans lequel les étapes pour générer l'étalement de liaison dynamique pour chacun de la pluralité de groupes sur la base des données de transaction historiques et de la matrice de distance associée en utilisant PCoA comprennent :

la génération de valeurs d'indicateur à remplir dans l'étalement de liaison dynamique sur la base d'une comparaison entre la force de liaison associée à chacun de la pluralité d'articles achetés calculée par PCoA avec un seuil de force de liaison, dans lequel l'étalement dynamique est rempli avec « 0 » si la force de liaison correspondante est inférieure au seuil de force de liaison et rempli avec un « 1 » si la force de liaison associée est supérieure au seuil de force de liaison dans lequel le seuil de force de liaison résulte en un critère lambda de Wilks optimal ; et

la mise à jour de l'étalement de liaison dynamique sur la base des valeurs d'indicateur générées, dans lequel « 0 » indique que l'article n'est pas lié à d'autres articles et « 1 » indique que l'article est lié à d'autres articles.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception de données de transaction historiques associées à chacune d'une pluralité de factures concernant des acheteurs et d'informations contextuelles, dans lequel les données de transaction historiques comprennent des données de transaction en ligne, un profil de client, des données de retour en ligne, et les informations contextuelles comprennent une pluralité d'événements locaux, dans lequel la pluralité d'événements locaux comprend des événements sportifs, des événements culturels,

dans lequel chacune de la pluralité de factures est associée à au moins un groupe parmi une pluralité de groupes, dans lequel chacun de la pluralité de groupes est formé sur la base d'un niveau de hiérarchie, et dans lequel le niveau de hiérarchie comprend un département, une catégorie, une classe et une sous-classe ;

la génération d'un étalement de retour pour chacun de la pluralité de groupes concernant chacune de la pluralité de factures sur la base des données de transaction historiques, dans lequel une valeur associée à chaque colonne de l'étalement de retour concernant chacun d'une pluralité d'articles associés à chacun de la pluralité de groupes est l'un parmi a) un zéro et b) un un sur la base d'un statut de retour associé à chacun d'une pluralité d'articles achetés, dans lequel la valeur zéro indique l'un parmi a) un article n'est pas retourné et b) l'article n'est pas acheté, dans lequel la valeur un indique que l'article est retourné précédemment et, dans lequel chacun de la pluralité d'articles achetés comprend une pluralité d'attributs et, dans lequel chacune de la pluralité de valeurs d'attribut est l'une parmi (i) une valeur qualitative ou (ii) une valeur quantitative ;

la génération simultanée d'un étalement de similarité dynamique pour chacun de la pluralité de groupes concernant chacune de la pluralité de factures sur la base des données de transaction historiques, dans lequel chacune d'une pluralité de colonnes associées à l'étalement de similarité concerne chacun de la pluralité d'articles associés à chacun de la pluralité de groupes, dans lequel chacune de la pluralité de colonnes associées à l'étalement de similarité est mise à jour avec un nombre d'articles similaires associés à chacun de la pluralité d'articles achetés parmi la pluralité d'articles en mesurant une similarité entre chacun de la pluralité d'articles achetés concernant chacun de la pluralité de groupes en utilisant l'une parmi (i) une matrice de distance, (ii) une matrice de corrélation et (iii) une matrice de pourcentage de correspondance d'attributs ;

la génération simultanée d'un étalement de liaison dynamique pour chacun de la pluralité de groupes concernant chacune de la pluralité de factures sur la base des données de transaction historiques en appliquant une analyse en coordonnées principales (PCoA) sur une matrice de distance associée ;

l'apprentissage d'un modèle d'apprentissage machine (ML) binaire multiple multivarié pour prédire une pluralité d'articles de retour potentiels sur la base des données de transaction historiques en mettant en correspondance l'étalement de retour associé à chacun de la pluralité de groupes avec l'un parmi a) l'étalement de similarité dynamique et b) l'étalement de liaison dynamique associé à chacun de la pluralité de groupes et le profil de client et les informations contextuelles ; et

le réglage fin du modèle ML binaire multiple multivarié entraîné en modifiant des entrées associées à l'un parmi a) l'étalement de similarité et d) l'étalement de liaison jusqu'à ce qu'un critère lambda de Wilks optimal soit obtenu, dans lequel les entrées comprennent la matrice de distance, la matrice de corrélation, la matrice de pourcentage de correspondance d'attributs et une force de liaison obtenue à partir de PCoA.

10. Un ou plusieurs supports de stockage d'informations lisibles par machine non transitoires selon la revendication 9, dans lequel pendant l'étape d'inférence, la pluralité d'articles de retour potentiels sont prédits parmi la pluralité d'articles achetés pour un nouvel acheteur en utilisant le modèle ML binaire multiple multivarié réglé avec précision, dans lequel la prédiction de la pluralité d'articles de retour potentiels est utilisée comme entrée pour optimiser des opérations associées à la pluralité d'articles de retour potentiels à travers une chaîne de valeurs, et dans lequel la pluralité d'articles de retour potentiels sont mis à jour dans une base de données centrale.

11. Un ou plusieurs supports de stockage d'informations lisibles par machine non transitoires selon la revendication 9, dans lequel les étapes pour générer l'étalement de similarité dynamique pour chacun de la pluralité de groupes en mesurant une similarité entre chacun de la pluralité d'articles achetés appartenant à chacun de la pluralité de groupes comprennent :

la conversion de la valeur d'attribut qualitative associée à chacun de la pluralité d'articles achetés correspondant à chacun de la pluralité de groupes en valeur quantitative sur la base d'une performance de vente associée à chacun de la pluralité d'articles achetés ;

la normalisation de la valeur d'attribut qualitative convertie et des valeurs d'attribut quantitatives associées à chacun de la pluralité d'articles en utilisant une technique de normalisation ;

le calcul de l'une parmi (i) la matrice de distance entre chaque paire d'articles achetés parmi la pluralité d'articles achetés associés à chacun de la pluralité de groupes en utilisant les valeurs d'attribut normalisées (ii) la matrice de corrélation entre chaque paire d'articles achetés associés à chacun de la pluralité de groupes en utilisant l'une parmi (a) les ventes hebdomadaires (b) mensuelles et (c) annuelles de la paire d'articles achetés et (iii) la matrice de pourcentage de correspondance d'attributs pour chaque paire d'articles achetés en considérant les valeurs d'attribut associées à chacun de la pluralité d'articles achetés ; et

la génération de l'étalement de similarité dynamique pour chacun de la pluralité de groupes en comptant le nombre d'articles achetés similaires pour chacun de la pluralité d'articles achetés et en remplissant l'étalement de similarité dynamique sur la base d'une coupure de valeur idéale pour l'une parmi (i) la matrice de distance, (ii) la matrice de corrélation et (iii) la matrice de pourcentage de correspondance d'attributs, dans lequel une valeur de coupure idéale associée résulte en un critère lambda de Wilks optimal.

12. Un ou plusieurs supports de stockage d'informations lisibles par machine non transitoires selon la revendication 9, dans lequel les étapes pour générer l'étalement de liaison dynamique pour chacun de la pluralité de groupes sur la base des données de transaction historiques et de la matrice de distance associée en utilisant PCoA comprennent :

la génération de valeurs d'indicateur à remplir dans l'étalement de liaison dynamique sur la base d'une comparaison entre la force de liaison associée à chacun de la pluralité d'articles achetés calculée par PCoA avec un seuil de force de liaison, dans lequel l'étalement dynamique est rempli avec « 0 » si la force de liaison correspondante est inférieure au seuil de force de liaison et rempli avec un « 1 » si la force de liaison associée est supérieure au seuil de force de liaison dans lequel le seuil de force de liaison résulte en un critère lambda de Wilks optimal ; et

la mise à jour de l'étalement de liaison dynamique sur la base des valeurs d'indicateur générées, dans lequel « 0 » indique que l'article n'est pas lié à d'autres articles et « 1 » indique que l'article est lié à d'autres articles.

100

FIG. 1A

Return spread
generation
module 122

Dynamic
similarity spread
generation module
124

Dynamic linkage
spread generation
module 126

Multivariate multiple
binary ML model
training module 128

Multivariate multiple
binary ML model
finetuning module 130

FIG. 1B

200

receive a historical transaction data associated with each of a plurality of invoices pertaining to shoppers and a contextual information, wherein the historical transaction data comprises an online transaction data, a customer profile, an online return data, and the contextual information comprises a plurality of local events, wherein each of the plurality of invoices is associated with at least one group from among a plurality of groups, wherein each of the plurality of groups is formed based on a level of hierarchy and, wherein the level of hierarchy comprises a department, a category, a class and a subclass

202

generate a return spread for each of the plurality of groups pertaining to each of the plurality of invoices based on the historical transaction data, wherein a value associated with each column of the return spread pertaining to each of a plurality of items associated with each of the plurality of groups is one of a) a zero and b) a one based on a return status associated with each of a plurality of purchased items, wherein zero value indicates one of a) an item is not returned and b) the item is not purchased, wherein the one value indicates the item is returned previously and, wherein each of the plurality of purchased items comprises a plurality of attributes and, wherein each of the plurality of attribute value is one of (i) a qualitative value or (ii) a quantitative value

204

A

**FIG. 2A**

A

simultaneously generatie a dynamic similarity spread for each of the plurality of groups pertaining to each of the plurality of invoices based on the historical transaction data, wherein each of a plurality of column associated with the similarity spread pertains to each of the plurality of items associated with each of the plurality of groups, wherein each of the plurality of columns associated with the similarity spread is updated with a number of similar items associated with each of the plurality of purchased items from among the plurality of items by measuring a similarity between each of the plurality of purchased items pertaining to each of the plurality of groups using one of (i) a distance matrix (ii) a correlation matrix and (iii) an attribute matching percentage matrix

206

simultaneously generat a dynamic linkage spread for each of the plurality of groups pertaining to each of the plurality of invoices based on the historical transaction data by applying PCoA (Principal Coordinate Analysis) on an associated distance matrix

208

train a multivariate multiple binary Machine Learning (ML) model for predicting a plurality of potential return items based on the historical transaction data by mapping the return spread associated with each of the plurality of groups with one of a) the dynamic similarity spread and b) the dynamic linkage spread associated with each of the plurality of groups and the customer profile and contextual information

210

finetune the trained multivariate multiple binary ML model by modifying inputs associated with one of a) similarity spread and d) linkage spread until an optimal wilks lambda criterion is obtained, wherein the inputs comprises the distance matrix, the correlation matrix, the attribute matching percentage matrix and a linkage strength obtained from PCoA

212

**FIG. 2B**

| SKU_ID | Brand | Memory (GB) | Color |
|---|---|---|---|
| 1 | X | 2 | White |
| 2 | Y | 4 | Pink |
| 3 | X | 16 | Pink |
|  |  |  |  |
|  |  |  |  |
|  | Z | 4 | Pink |
|  | Z | 16 | Pink |
|  | Y | 2 | Black |
|  | Y | 4 | Black |

| SKU_ID | Brand | Memory (GB) | Color |
|---|---|---|---|
| 1 | 0.3 | 2 | 0.09 |
| 2 | 0.1 | 4 | 0.07 |
| 3 | 0.3 | 16 | 0.07 |
|  |  |  |  |
|  |  |  |  |
|  | 0.02 | 4 | 0.07 |
|  | 0.02 | 16 | 0.07 |
|  | 0.1 | 2 | 0.2 |
| --- | 0.1 | 4 | 0.2 |

| SKU_ID | Brand | Memory (GB) | Color |
|---|---|---|---|
| 1 | 1 | 0 | 0.15 |
| 2 | 0.28 | 0.14 | 0 |
| 3 | 1 | 1 | 0 |
|  |  |  |  |
|  |  |  |  |
| -- | 0 | 0.14 | 0 |
|  | 0 | 1 | 0 |
|  | 0.28 | 0 | 1 |
| -- | 0.28 | 0.14 | 1 |

**FIG. 3**

**EP 4 617 971 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421018725
- CN 105574599 A
- US 2016321684 A1

**Non-patent literature cited in the description**

- **URBANKE PATRICK et al.** *Predicting Product Returns in E-Commerce: The Contribution of Mahalanobis Feature Extraction Completed Research Paper*